(19) **Europäisches Patentamt / European Patent Office / Office européen des brevets**

(11) **EP 4 604 405 A1**

(12) **EUROPEAN PATENT APPLICATION**
published in accordance with Art. 153(4) EPC

(43) Date of publication:
20.08.2025 Bulletin 2025/34

(21) Application number: 23879165.1

(22) Date of filing: 19.10.2023

(51) International Patent Classification (IPC):
*H04B 1/7163* (2011.01)

(52) Cooperative Patent Classification (CPC):
H04B 1/7163; H04B 1/717

(86) International application number:
PCT/CN2023/125370

(87) International publication number:
WO 2024/083179 (25.04.2024 Gazette 2024/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.10.2022 CN 202211296757

(71) Applicant: Huawei Technologies Co., Ltd.
Shenzhen, Guangdong 518129 (CN)

(72) Inventors:
• QIAN, Bin
Shenzhen, Guangdong 518129 (CN)

• LIU, Chenchen
Shenzhen, Guangdong 518129 (CN)
• PENG, Xiaohui
Shenzhen, Guangdong 518129 (CN)
• DU, Rui
Shenzhen, Guangdong 518129 (CN)
• YANG, Xun
Shenzhen, Guangdong 518129 (CN)

(74) Representative: Maiwald GmbH
Engineering
Elisenhof
Elisenstrasse 3
80335 München (DE)

(54) **SENSING-BASED COMMUNICATION METHOD AND APPARATUS**

(57) A sensing-based communication method and an apparatus are provided, which are applied to a UWB-based WPAN system, for example, the 802.15.4a protocol, the 802.15.4z protocol, the 802.15.4ab protocol, or the like in 802.15 series protocols; and may be further applied to a WLAN system, a sensing system, and the like in 802.11 series protocols including a next-generation Wi-Fi protocol of 802.11ax like 802.11be, Wi-Fi 7, or EHT, and a next generation of 802.11be like Wi-Fi 8, or UHR. A transmit end obtains control information, and sends a sensing signal based on the control information. Correspondingly, a receive end obtains the control information, and performs processing based on the control information. The control information indicates M cyclic shift bit quantities corresponding to M sequences, and at least two relative cyclic shift bit quantities in relative cyclic shift bit quantities between adjacent sequences in the M sequences are different. This effectively improves accuracy of a sensing result.

FIG. 4

EP 4 604 405 A1

## Description

This application claims priority to Chinese Patent Application No. 202211296757.0, filed with the China National Intellectual Property Administration on October 21, 2022, and entitled "SENSING-BASED COMMUNICATION METHOD AND APPARATUS", which is incorporated herein by reference in its entirety.

## TECHNICAL FIELD

This application relates to the field of communication technologies, and in particular, to a sensing-based communication method and an apparatus.

## BACKGROUND

Ultra wideband (ultra wideband, UWB) is a wireless carrier communication technology, and may transmit data through nanosecond-level non-sinusoidal narrow pulses. Therefore, ultra wideband occupies a quite wide spectrum range. Because of narrow pulses and low radiation spectrum density of UWB, UWB has advantages such as a strong multi-path resolution capability, low power consumption, and high confidentiality.

As the UWB technology is approved to be used in the civil field in 2002, ultra-wideband wireless communication has become one of popular physical layer technologies in short-range and high-speed wireless networks. Many world-renowned large companies, research institutes, and standardization organizations are actively engaged in the research, development, and standardization of ultra-wideband wireless communication technologies. The Institute of Electrical and Electronics Engineers (Institute of Electrical and Electronics Engineers, IEEE) has incorporated the UWB technology into IEEE 802 series wireless standards, and has released the UWB-based wireless personal area network (wireless personal area network, WPAN) standard IEEE 802.15.4a and an evolved version of the IEEE 802.15.4a, namely IEEE 802.15.4z. Currently, formulation of the next-generation UWB wireless personal area network standard 802.15.4ab has been put on the agenda. Using UWB for sensing is one of the important technical directions of 802.15.4ab. For example, when the UWB is used for sensing, a pulse burst transmitting manner may be used. Each pulse burst includes a plurality of pulses. A pulse burst repetition interval may be set to a large value to ensure a large unambiguous distance. In addition, because there are a large quantity of pulses, transmission power can be increased.

However, in a current sensing-based communication method, accuracy of a sensing result still needs to be improved.

## SUMMARY

Embodiments of this application disclose a sensing-based communication method and an apparatus, to effectively improve accuracy of a sensing result.

According to a first aspect, an embodiment of this application provides a sensing-based communication method. The method includes:

obtaining control information, where the control information includes a cyclic shift parameter, the cyclic shift parameter indicates M cyclic shift bit quantities, the M cyclic shift bit quantities correspond to M sequences, and when M=1, the M cyclic shift bit quantities are cyclic shift bit quantities of sequences relative to a reference sequence, when M=2, the M cyclic shift bit quantities include a cyclic shift bit quantity of one of the M sequences relative to a reference sequence and a relative cyclic shift bit quantity between the M sequences, or the M cyclic shift bit quantities include cyclic shift bit quantities of sequences in the M sequences relative to a reference sequence, or when M is greater than 2, at least two relative cyclic shift bit quantities in relative cyclic shift bit quantities between adjacent sequences in the M sequences corresponding to the M cyclic shift bit quantities are different; and processing a signal based on the control information.

In embodiments of this application, when M=1 or M=2, two communication parties have a consistent understanding of the cyclic shift bit quantity by using the control information. This effectively avoids a case in which a sensing result is inaccurate because the two communication parties have inconsistent understandings of the cyclic shift bit quantity, and improves accuracy of the sensing result.

When M is greater than 2, if the relative cyclic shift bit quantities between adjacent sequences are the same, side lobes may overlap when a receive end of a sensing signal performs a related operation. Consequently, a side lobe amplitude is high, the receive end cannot effectively determine a peak position (for example, a highest peak), and a zero correlation zone (zero correlation zone, ZCZ) cannot be effectively determined, resulting in low accuracy of the sensing result. However, in embodiments of this application, at least two relative cyclic shift bit quantities in relative cyclic shift bit quantities between adjacent sequences are different. Therefore, when the receive end of the sensing signal processes the sensing signal, for example, performs the related operation, a case in which side lobes overlap is effectively reduced, thereby reducing a probability of a high side lobe amplitude. This effectively reduces a side lobe amplitude of a non-zero correlation zone, ensures that the receive end of the sensing signal can effectively determine the zero correlation zone, and effectively improves accuracy of the sensing result.

In a possible implementation, the processing a signal based on the control information includes: determining the M sequences based on the M cyclic shift bit quantities and the reference sequence; and processing the signal based on the M sequences.

In embodiments of this application, the receive end of the sensing signal may determine the M sequences based on the control information, to ensure that the receive end of the sensing signal and a transmit end of the sensing signal have a consistent understanding of the M sequences. The two communication parties have a consistent understanding of the M sequences. In this case, the receive end of the sensing signal may effectively correlate a received sensing signal based on the M sequences. This effectively improves accuracy of the sensing result.

In a possible implementation, the processing the signal based on the M sequences includes: correlating the M sequences with the received signal; and determining information about a target based on a correlation result.

For example, the determining information about a target based on a correlation result includes: determining a zero correlation zone based on the correlation result, and determining the information about the target based on the zero correlation zone. The information about the target may include at least one of the following: a speed of the target, an angle of the target, a distance of the target, and attenuation of the target. The correlation shown in embodiments of this application may include autocorrelation. For example, autocorrelation is performed between the M sequences and the received signal. For example, autocorrelation may be understood as a multiplication and product accumulation of a sequence and elements of the sequence at different time points. Because the signal received by the receive end is determined by using the M sequences, autocorrelation may be performed between the M sequences and the signal.

In a possible implementation method, the obtaining control information includes: determining the control information; or receiving the control information.

In embodiments of this application, the first aspect may be performed by the receive end of the sensing signal, and the receive end of the sensing signal may determine the control information, and then send the control information to the transmit end of the sensing signal; or the receive end of the sensing signal may receive the control information.

According to a second aspect, an embodiment of this application provides a sensing-based communication method. The method includes:

obtaining control information, where the control information includes a cyclic shift parameter, the cyclic shift parameter indicates M cyclic shift bit quantities, the M cyclic shift bit quantities correspond to M sequences, and when M=1, the M cyclic shift bit quantities are cyclic shift bit quantities of sequences relative to a reference sequence, when M=2, the M cyclic shift bit quantities include a cyclic shift bit quantity of one of the M sequences relative to a reference sequence and a relative cyclic shift bit quantity between the M sequences, or the M cyclic shift bit quantities include cyclic shift bit quantities of sequences in the M sequences relative to a reference sequence, or when M is greater than 2, at least two relative cyclic shift bit quantities in relative cyclic shift bit quantities between adjacent sequences in the M sequences corresponding to the M cyclic shift bit quantities are different; and sending a signal based on the control information.

In embodiments of this application, when M=1 or M=2, two communication parties have a consistent understanding of the cyclic shift bit quantity by using the control information. This effectively avoids a case in which a sensing result is inaccurate because the two communication parties have inconsistent understandings of the cyclic shift bit quantity, and improves accuracy of the sensing result.

When M is greater than 2, if the relative cyclic shift bit quantities between adjacent sequences are the same, when a receive end of a sensing signal performs a related operation, side lobes are very likely to overlap. Consequently, a side lobe amplitude is high, the receive end cannot effectively determine a peak position, and a zero correlation zone (zero correlation zone, ZCZ) cannot be effectively determined, resulting in low accuracy of the sensing result. However, in embodiments of this application, at least two relative cyclic shift bit quantities in relative cyclic shift bit quantities between adjacent sequences are different. Therefore, when the receive end of the sensing signal processes the sensing signal, for example, performs the related operation, a case in which side lobes overlap is effectively reduced, thereby reducing a probability of a high side lobe amplitude. This effectively reduces a side lobe amplitude of a non-zero correlation zone, ensures that the receive end of the sensing signal can effectively determine the zero correlation zone, and effectively improves accuracy of the sensing result.

In a possible implementation, the sending a signal based on the control information includes: determining the M sequences based on the M cyclic shift bit quantities and the reference sequence; and sending the signal based on the M sequences.

In embodiments of this application, a transmit end of the sensing signal may determine the M sequences based on the control information, to ensure that the receive end of the sensing signal and the transmit end of the sensing signal have a consistent understanding of the M sequences. The two communication parties have a consistent understanding of the M sequences. In this case, the receive end of the sensing signal may effectively correlate a received sensing signal based on the M sequences. This effectively improves accuracy of the sensing result.

In a possible implementation method, the obtaining control information includes: receiving the control information; or determining the control information.

In embodiments of this application, the second aspect may be performed by the transmit end of the sensing signal, and the transmit end of the sensing signal may receive the control information; or the transmit end of the sensing signal determines the control information, and then sends the control information to the receive end of the sensing signal.

With reference to the first aspect or the second aspect, in a possible implementation, the relative cyclic shift bit quantities are greater than or equal to a cyclic shift bit quantity threshold, and the cyclic shift bit quantity threshold is determined based on an interval between adjacent short bursts.

In embodiments of this application, the cyclic shift bit quantity threshold may be referred to as a minimum cyclic shift bit quantity in the relative cyclic shift bit quantities between the adjacent sequences in the M sequences. It is ensured that each relative cyclic shift bit quantity is greater than or equal to the cyclic shift bit quantity threshold, so that a length (or referred to as a size) of a zero correlation zone between the M sequences that is determined by the two communication parties by using the M cyclic shift bit quantities is greater than or equal to the cyclic shift bit quantity threshold. This effectively increases an unambiguous distance and expands a sensing range. The unambiguous distance may be understood as that when an echo signal generated when a pulse meets a target reaches the receive end, a line of sight path of a next pulse also reaches the receive end. Therefore, if the unambiguous distance is excessively small, the receive end cannot effectively distinguish a pulse corresponding to the signal received by the receive end.

With reference to the first aspect or the second aspect, in a possible implementation, the control information further includes at least one of the following: a quantity of pulses in a short burst, an interval between adjacent pulses in the short burst, and the interval between adjacent short bursts.

In embodiments of this application, the control information includes the quantity of pulses, the interval between adjacent pulses in the short burst, and the interval between adjacent short bursts, so that the receive end can efficiently receive the sensing signal, to improve communication efficiency.

With reference to the first aspect or the second aspect, in a possible implementation, a pulse in an $i^{th}$ short burst is determined by an $i^{th}$ element of each sequence in the M sequences, i is an integer greater than or equal to 1 and less than or equal to N, N is equal to a quantity of elements in the sequence, elements in the sequence include -1, 0, and +1, and -1 represents a negative pulse and +1 represents a positive pulse, or -1 represents a positive pulse and +1 represents a negative pulse.

In embodiments of this application, when M is greater than or equal to 2, a plurality of pulses in the short burst may be referred to as a pulse burst, and the pulse in the $i^{th}$ short burst is determined by the $i^{th}$ element of each sequence in the M sequences, so that each pulse burst includes a plurality of pulses. A pulse burst repetition interval (burst repetition interval, BPI) (which may also be understood as an interval between adjacent short bursts) may be set to a large value to ensure a large unambiguous distance. In addition, because there are a large quantity of pulses, transmission power can be effectively increased.

With reference to the first aspect or the second aspect, in a possible implementation, the control information further includes at least one of a sequence identifier and a sequence length, and the at least one of the sequence identifier and the sequence length indicates the reference sequence.

In embodiments of this application, the control information includes information indicating the reference sequence, so that the two communication parties can determine the reference sequence more efficiently and flexibly based on the control information, thereby effectively determining the M sequences based on the reference sequence.

With reference to the first aspect or the second aspect, in a possible implementation, the control information further includes at least one of the following: a sequence type, where the sequence type includes a first sequence type, and the first sequence type indicates that the M sequences have a periodic zero correlation zone; and a cyclic shift type, where the cyclic shift type includes using different relative cyclic shift bit quantities.

In embodiments of this application, the control information includes at least one of the sequence type or the cyclic shift type, so that sensing flexibility can be improved. For example, the two communication parties may determine, based on the control information, the M sequences that have the periodic zero correlation zone, and there may be at least two different relative cyclic shift bit quantities in the relative cyclic shift bit quantities between the adjacent sequences in the M sequences. For another example, the two communication parties may determine, based on the control information, the M sequences that have the periodic zero correlation zone, and the relative cyclic shift bit quantities between the adjacent sequences in the M sequences may be the same. For another example, the two communication parties may determine, based on the control information, M sequences having an aperiodic zero correlation zone.

With reference to the first aspect or the second aspect, in a possible implementation, that the cyclic shift parameter indicates M cyclic shift bit quantities includes: The cyclic shift parameter includes the relative cyclic shift bit quantities between the adjacent sequences in the M sequences; or the cyclic shift parameter includes offsets between the relative cyclic shift bit quantities between the adjacent sequences in the M sequences and the cyclic shift bit quantity threshold; or the cyclic shift parameter includes information about a random number generation algorithm and a quantity of bits of a random number, and the random number generation algorithm and the quantity of bits of the random number are used to determine the M cyclic shift bit quantities.

In embodiments of this application, the cyclic shift parameter includes the relative cyclic shift bit quantities between the adjacent sequences in the M sequences, so that signaling overheads can be effectively reduced. The cyclic shift parameter includes the offset between the relative cyclic shift bit quantities and the cyclic shift bit quantity threshold, so that signaling overheads can be further reduced. The cyclic shift parameter includes the information about the random number generation algorithm and the quantity of bits of the random number, so that the two communication parties can generate a same random number by using the random number generation algorithm and the quantity of bits of the random number. This ensures that the M cyclic shift bit quantities determined by the two communication parties are consistent, improves communication efficiency, and further reduces signaling overheads.

According to a third aspect, an embodiment of this application provides a communication apparatus, configured to perform the method according to any one of the first aspect or the possible implementations of the first aspect. The communication apparatus includes a unit for performing the method according to any one of the first aspect or the possible implementations of the first aspect.

According to a fourth aspect, an embodiment of this application provides a communication apparatus, configured to perform the method according to any one of the second aspect or the possible implementations of the second aspect. The communication apparatus includes a unit for performing the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments shown below.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In embodiments of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In embodiments of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a seventh aspect, an embodiment of this application provides a communication apparatus. The communication apparatus includes a logic circuit and an interface, the logic circuit is coupled to the interface, and the logic circuit is configured to: obtain control information, and process a sensing signal based on the control information.

For example, the logic circuit is configured to input the control information through the interface.

For example, the logic circuit is further configured to output feedback information based on a processing result.

According to an eighth aspect, an embodiment of this application provides a communication apparatus. The communication apparatus includes a logic circuit and an interface, the logic circuit is coupled to the interface, and the logic circuit is configured to: obtain control information, and output a sensing signal based on the control information.

For example, the logic circuit is configured to input the control information through the interface.

For example, the interface is configured to input feedback information.

According to a ninth aspect, an embodiment of this application provides a computer-readable storage medium. The computer-readable storage medium is configured to store a computer program, and when the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method according to any one of the second aspect or the possible implementations of the second aspect is performed.

According to an eleventh aspect, an embodiment of this application provides a computer program product. The computer program product includes a computer program, and when the computer program is run on a computer, the method according to any one of the first aspect or the possible implementations of the first aspect is performed.

According to a twelfth aspect, an embodiment of this application provides a computer program product. The computer program product includes a computer program, and when the computer program is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a transmit end and a receive end. The transmit end is configured to perform the method according to any one of the second aspect or the possible implementations of the second aspect, and the receive end is configured to perform the method according to any one of the first aspect or the possible implementations of the first aspect.

For technical effects achieved in the third aspect to the fifteenth aspect, refer to the technical effects of the first aspect or the second aspect or beneficial effects in the following method embodiments. Details are not described herein.

## BRIEF DESCRIPTION OF DRAWINGS

FIG. 1a is a diagram of an architecture of a communication system according to an embodiment of this application;
FIG. 1b is a diagram of an architecture of a communication system according to an embodiment of this application;
FIG. 2a is a diagram of a sensing scenario based on one sensing responder according to an embodiment of this application;
FIG. 2b is a diagram of a sensing scenario based on one sensing responder according to an embodiment of this application;
FIG. 2c is a diagram of a sensing scenario based on a plurality of sensing responders according to an embodiment of this application;
FIG. 2d is a diagram of a sensing scenario based on a plurality of sensing responders according to an embodiment of this application;
FIG. 2e is a diagram of a sensing scenario based on a sensing requester according to an embodiment of this application;
FIG. 2f is a diagram of a sensing scenario based on a sensing requester according to an embodiment of this application;
FIG. 3 is a diagram of a transmitted sequence according to an embodiment of this application;
FIG. 4 is a schematic flowchart of a sensing-based communication method according to an embodiment of this application;
FIG. 5a is a diagram of a normalized autocorrelation result according to an embodiment of this application;
FIG. 5b is a diagram of a normalized autocorrelation result according to an embodiment of this application;
FIG. 5c is a diagram of a normalized autocorrelation result according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a communication apparatus according to an embodiment of this application.

## DESCRIPTION OF EMBODIMENTS

To make the objectives, technical solutions, and advantages of this application clearer, this application is further described below with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various positions in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression means any combination of these items. For example, at least one of a, b, or c may represent: a, b, c, "a and b", "a and c", "b and c", or "a, b, and c".

The technical solutions provided in embodiments of this application are applicable to a WPAN based on a UWB technology. For example, the method provided in embodiments of this application is applicable to IEEE 802.15 series protocols such as the 802.15.4a protocol, the 802.15.4z protocol, the 802.15.4ab protocol, or a future-generation UWB WPAN standard. Examples are not listed one by one herein. Alternatively, the technical solutions provided in embodiments of this application may be further applied to a WLAN, for example, IEEE802.11 series protocols in Wi-Fi, for example, the 802.11a/b/g protocol, the 802.11n protocol, the 802.11ac protocol, the 802.11ax protocol, the 802.11be protocol, or a next-generation protocol. Examples are not listed one by one herein. For example, the technical solutions provided in embodiments of this application may support Wi-Fi 7, which may also be referred to as extremely high throughput (extremely high throughput, EHT), and may support Wi-Fi 8, which may also be referred to as ultra high reliability (ultra high reliability, UHR), ultra high reliability and throughput (ultra high reliability and throughput, UHRT), or the like. Alternatively, the methods provided in embodiments of this application may be applied to various communication systems, for example, an internet of things (internet of things, IoT) system, vehicle-to-everything (Vehicle to X, V2X), and a narrowband internet of things (narrowband internet of things, NB-IoT) system, and are applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like; and may also be applied to an LTE frequency division duplex (frequency division duplex, FDD) system, an LTE time division duplex (time division duplex, TDD) system, a long term evolution (long term evolution, LTE) system, a 5th-generation (5th-generation, 5G) communication system, a 6th-generation (6th-generation, 6G) communication system, or the like.

The UWB technology is a new wireless communication technology. In the UWB technology, data is transmitted through a nanosecond-level non-sinusoidal narrow pulse, and modulation is performed on pulses with very steep rise and fall time. Therefore, the UWB technology occupies a quite wide spectrum range, so that a signal has a bandwidth of a Giga Hertz (GHz) magnitude. A bandwidth used by UWB is usually higher than 1 GHz. A UWB system does not need to generate a sinusoidal carrier signal and can directly transmit a pulse sequence. Therefore, the UWB system has a wide spectrum and low average power. A UWB wireless communication system has advantages such as a strong multi-path resolution capability, low power consumption, and high confidentiality. This facilitates coexistence with other systems, thereby improving spectrum utilization and system capacity. In addition, in a short-range communication application, transmission power of a UWB transmitter may be usually lower than 1 milliwatt (mW). Theoretically, interference generated from a UWB signal may be equivalent to white noise. This facilitates good coexistence between ultra-wideband and existing narrowband communication. Therefore, the UWB system and a narrowband (narrowband, NB) communication system can simultaneously operate without interfering with each other. The method provided in embodiments of this application may be implemented by a communication apparatus in a wireless communication system. In a communication apparatus, a module that implements a UWB system function may be referred to as a UWB module (for example, may be configured to send a UWB pulse), and a module that implements a narrowband communication system function may be referred to as a narrowband communication module. The UWB module and the narrowband communication module may be different apparatuses, chips, or the like. This is not limited in embodiments of this application. Certainly, the UWB module and the narrowband communication module may alternatively be integrated into one apparatus or chip. Implementations of the UWB module and the narrowband communication module in the communication apparatus are not limited in embodiments of this application. For example, a sensing signal shown in embodiments of this application may be sent by the UWB module. Control information may be sent by the UWB module, the narrowband communication module, or the like. This is not limited in embodiments of this application.

Embodiments of this application are mainly described by using a WPAN as an example, and in particular, by using a network used in IEEE 802.15 series standards as an example. However, a person skilled in the art easily understands that various aspects in embodiments of this application may be extended to other networks using various standards or protocols, for example, a wireless local area network (wireless local area network, WLAN), Bluetooth (Bluetooth), a high performance radio LAN (high performance radio LAN, HIPERLAN) (a wireless standard similar to the IEEE 802.11 standard, mainly used in Europe), a wide area network (WAN), or another network that is currently known or developed in the future. Therefore, regardless of a used coverage area and a used wireless access protocol, the various aspects provided in embodiments of this application are applicable to any appropriate wireless network.

The method provided in embodiments of this application may be implemented by a communication apparatus in a wireless communication system. The communication apparatus may be an apparatus in a UWB system. For example, the communication apparatus may include but is not limited to a communication server, a router, a switch, a bridge, a computer, a mobile phone, and the like. For another example, the communication apparatus may include a central control point, for example, a personal area network (personal area network, PAN) or a PAN coordinator. For another example, the communication apparatus may include user equipment (user equipment, UE). The user equipment may include various handheld devices, vehicle-mounted devices, wearable devices, internet of things (internet of things, IoT) devices, computing devices, other processing devices connected to a wireless modem, or the like that have a wireless communication function. Examples are not listed one by one herein. For another example, the communication apparatus may include a chip, and the chip may be disposed in a communication server, a router, a switch, a user terminal, or the like. Examples are not listed one by one herein.

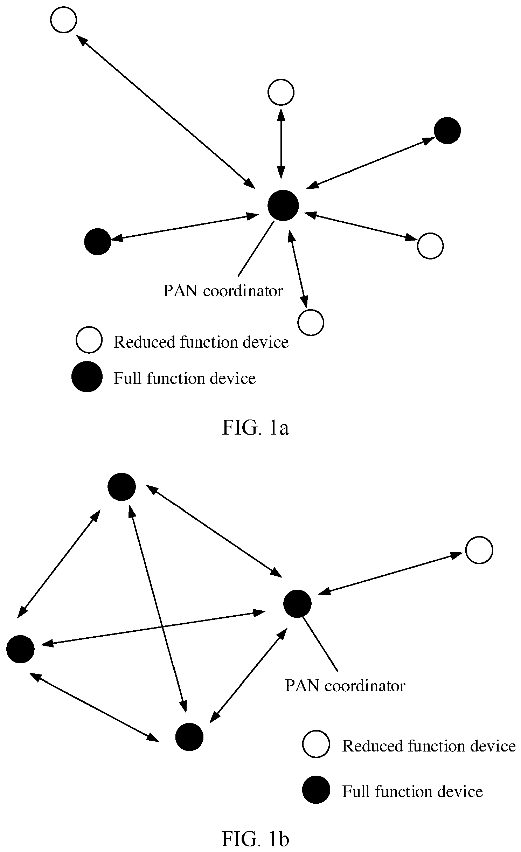

For example, FIG. 1a and FIG. 1b are diagrams of an architecture of a communication system according to an embodiment of this application. FIG. 1a shows a star topology structure according to an embodiment of this application, and FIG. 1b shows a point-to-point topology structure according to an embodiment of this application. As shown in FIG. 1a, in the star topology, one central control node may perform data communication with one or more other devices. As shown in FIG. 1b, in the point-to-point topology structure, data communication may be performed between different devices. In FIG. 1a and FIG. 1b, both a full function device (full function device) and a reduced function device (reduced function device) may be understood as communication apparatuses shown in this application. The full function device and the reduced function device are relative to each other. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 1b is merely an example, and the other three full function devices shown in FIG. 1b may also be used as PAN coordinators, which are not shown one by one herein.

It may be understood that the full function device and the reduced function device shown in embodiments of this application are merely examples of the communication apparatus, and any communication apparatus that can implement the sensing-based communication method provided in embodiments of this application falls within the protection scope of embodiments of this application. A sensing initiator, a sensing responder, and the like shown below may be full function devices, or may be reduced function devices. This is not limited in embodiments of this application.

The method provided in embodiments of this application may be applied to a communication apparatus. For example, the communication apparatus shown in embodiments of this application may include a sensing initiator (initiator) and a sensing responder (responder). The sensing initiator and the sensing responder are relative to each other. For example, if the sensing initiator is a party that initiates a sensing procedure, the sensing responder may be a party that responds to the party that initiates the sensing procedure. For example, the sensing initiator may be a transmit end of a UWB signal, and the sensing responder is a receive end of a UWB echo signal. For another example, the sensing initiator may be a receive end of a UWB echo signal, and the sensing responder is a transmit end of a UWB signal. A sensing requester may be understood as a party that initiates a sensing request to the sensing initiator. In a case in which the sensing initiator is a transmit end of a UWB signal and the sensing responder is a receive end of a UWB echo signal, because the UWB signal sent by the sensing initiator needs to reach a target first and then reach the sensing responder (for example, the UWB signal reaches the sensing responder after being reflected or scattered by the target), compared with the UWB signal sent by the sensing initiator, the signal received by the sensing responder may be referred to as a UWB echo signal. It may be understood that, for ease of description, the UWB signal and the UWB echo signal may be collectively referred to as a UWB signal below, and are not distinguished. The UWB signal shown in embodiments of this application may also be referred to as a sensing signal, a UWB pulse (pulse for short), or the like. Because the UWB signal is applied to a sensing scenario, the UWB signal may also be referred to as a sensing signal. It may be understood that the sensing signal may also be referred to as a signal.

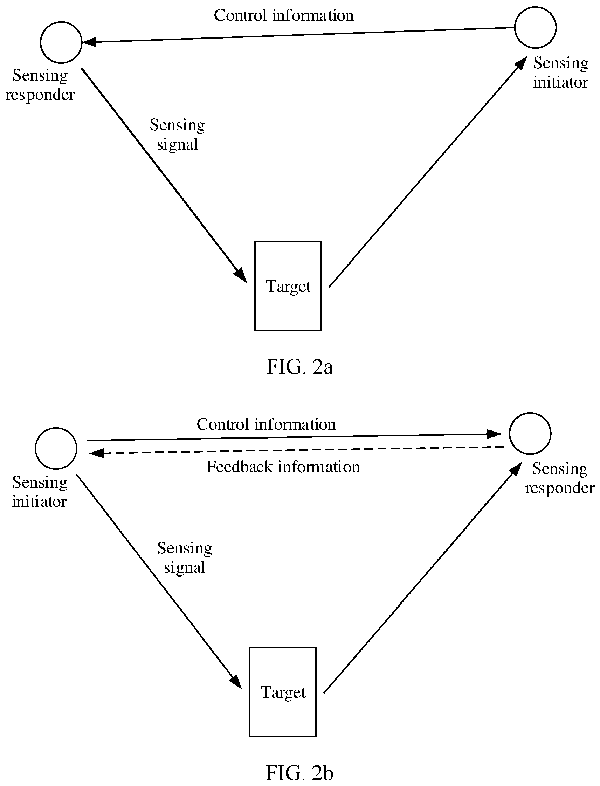

Based on the sensing initiator, the sensing responder, and the sensing requester shown above, embodiments of this application provide the following six scenarios. It may be understood that the scenarios shown in FIG. 2a to FIG. 2f are merely examples, and should not be construed as a limitation on embodiments of this application.

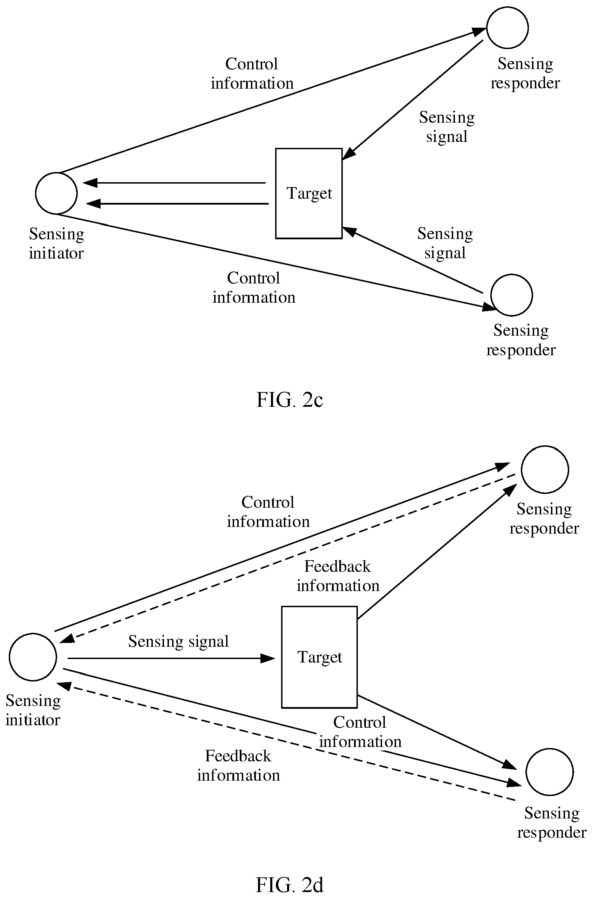

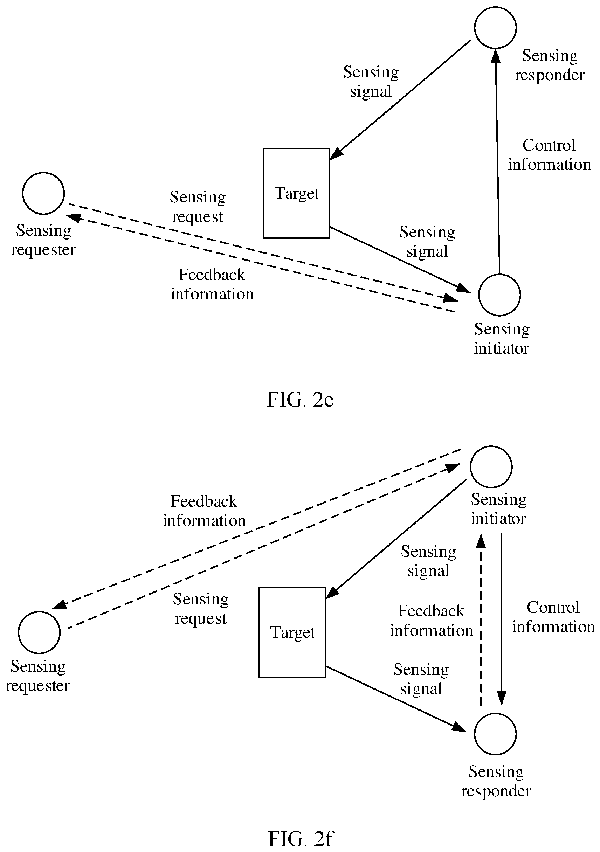

FIG. 2a and FIG. 2b may be understood as sensing scenarios based on one sensing responder, for example, which are referred to as bi-static sensing (bi-static sensing) scenarios. FIG. 2c and FIG. 2d may be understood as sensing scenarios based on a plurality of sensing responders, for example, which are referred to as multi-static sensing (multi-static sensing) scenarios. In addition, in FIG. 2a and FIG. 2c, a sensing initiator is a receive end of a UWB echo signal, and s sensing responder is a transmit end of a UWB signal. In FIG. 2b and FIG. 2d, a sensing initiator is a transmit end of a UWB signal, and a sensing responder is a receive end of a UWB signal. FIG. 2e and FIG. 2f may be understood as sensing scenarios based on participation of a sensing initiator, a sensing responder, and a sensing requester, for example, referred to as sensing by proxy (sensing by proxy).

As shown in FIG. 2a, a sensing initiator may send control information to a sensing responder, so that the sensing responder may send a sensing signal based on the control information. The sensing initiator receives the sensing signal, and obtains related information of a target, for example, information such as a distance, an angle, a speed, and attenuation of the target, based on the control information and the sensing signal. As shown in FIG. 2b, a sensing initiator may send control information to a sensing responder, and send a sensing signal based on the control information. The sensing responder receives the control information and the sensing signal, and obtains related information of a target based on the control information and the sensing signal. Optionally, the sensing responder may send feedback information to the sensing initiator, and the sensing initiator obtains information related to the target by using the feedback information. The feedback information is used to feed back the related information of the target. As shown in FIG. 2c, a sensing initiator may send control information to a plurality of sensing responders, so that a sensing responder in the plurality of sensing responders may send a sensing signal based on the control information. The sensing initiator receives sensing signals from the plurality of sensing responders, and obtains related information of a target based on the control information and the plurality of sensing signals. As shown in FIG. 2d, a sensing initiator may send control information to a plurality of sensing responders, and send a sensing signal based on the control information. A sensing responder in the plurality of sensing responders receives the control information and the sensing signal, and obtains related information of a target based on the control information and the sensing signal. Optionally, a sensing responder in the plurality of sensing responders may send feedback information to the sensing initiator, and the sensing initiator may obtain the information related to the target based on a plurality of pieces of feedback information. As shown in FIG. 2e, a sensing requester may send a sensing request to a sensing initiator, the sensing initiator sends control information to a sensing responder, the sensing responder sends a sensing signal based on the control information, the sensing initiator receives the sensing signal, and obtains related information of a target based on the control information and the sensing signal. Optionally, the sensing initiator may send feedback information to the sensing requester. As shown in FIG. 2f, a sensing requester sends a sensing request to a sensing initiator, the sensing initiator sends control information to a sensing responder, and the sensing initiator sends a sensing signal based on the control information. The sensing responder obtains related information of a target based on the control information and the sensing signal. Optionally, the sensing responder sends feedback information, and the sensing initiator receives the feedback information and sends the feedback information to the sensing requester.

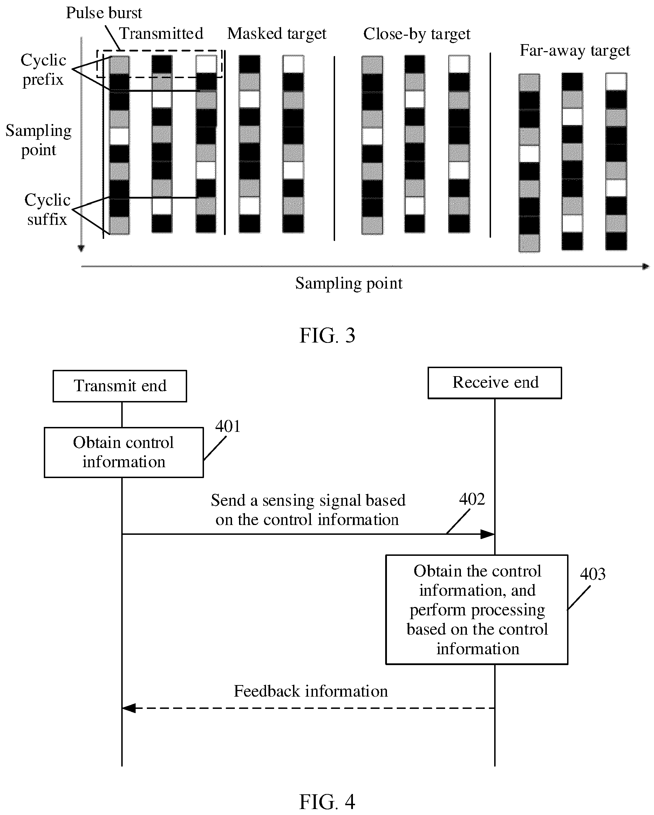

The method shown in FIG. 4 may be applied to a transmit end and a receive end. The transmit end may be understood as a transmit end of a sensing signal, and the receive end may be understood as a receive end of the sensing signal.

For example, the transmit end may include a full function device, and the receive end may include a reduced function device. For another example, the transmit end may include a reduced function device, and the receive end includes a reduced function device. For another example, the transmit end includes a reduced function device, and the receive end includes a full function device. For another example, both the transmit end and the receive end are full function devices.

For example, the transmit end may include the sensing responder shown in FIG. 2a, and the receive end may include the sensing initiator shown in FIG. 2a. For another example, the transmit end may include the sensing initiator shown in FIG. 2b, and the receive end may include the sensing responder shown in FIG. 2b. For another example, the transmit end may include the sensing responder shown in FIG. 2c, and the receive end may include the sensing initiator shown in FIG. 2c. For another example, the transmit end may include the sensing initiator shown in FIG. 2d, and the receive end may include the sensing responder shown in FIG. 2d. For another example, the transmit end may include the sensing responder shown in FIG. 2e, and the receive end may include the sensing initiator shown in FIG. 2e. For another example, the transmit end may include the sensing initiator shown in FIG. 2f, and the receive end may include the sensing responder shown in FIG. 2f. It may be understood that the transmit end and the receive end listed based on FIG. 2a to FIG. 2f are merely examples, and any apparatus that can implement the method provided in embodiments of this application falls within the protection scope of embodiments of this application. Therefore, the transmit end and the receive end listed above should not be construed as a limitation on embodiments of this application. It may be understood that in embodiments of this application, the method provided in embodiments of this application is described by using the transmit end and the receive end. However, in an information transmission process of the transmit end and the receive end, there may be another apparatus. For example, a forwarding apparatus is used to forward information between the transmit end and the receive end. Therefore, mutual transfer of information in embodiments of this application may be implemented by using a technical means that can be completed by a person skilled in the art, and an apparatus other than the transmit end and the receive end is not limited in embodiments of this application.

The foregoing descriptions about the communication system, the transmit end, and the receive end are also applicable to the following.

Currently, a pulse burst transmitting manner exists, and pulses in a plurality of pulse bursts may be encoded by using a sequence set. For example, +1 corresponds to a positive pulse, -1 corresponds to a negative pulse, and 0 corresponds to no pulse; or +1 corresponds to a negative pulse, -1 corresponds to a positive pulse, and 0 corresponds to no pulse. In a current pulse burst transmitting manner, cyclic shift bit quantities of adjacent sequences in a sequence set are the same. For example, a sequence in the sequence set may include three elements, for example, +1, -1, and 0. Generally, the sequence in the sequence set may include a ternary sequence (for example, an ipatov sequence) and a cyclic shift sequence of the ternary sequence. The ternary sequence may have a complete periodic autocorrelation characteristic, and the cyclic shift sequence of the ternary sequence also has a complete periodic autocorrelation characteristic. Because the sequence in the sequence set has a periodic autocorrelation characteristic, the sequence set may also be referred to as a periodic zero correlation zone (zero correlation zone, ZCZ) sequence set. For example, for related descriptions of the ipatov sequence, refer to IEEE 802.15.4z-2020.chapter15 or IEEE 802.15.4-2020.chapter15. Specific content of the ipatov sequence is not enumerated in embodiments of this application. The ternary sequence shown below may be understood as an ipatov sequence. A complete periodic autocorrelation characteristic may be understood as that a main lobe amplitude of periodic autocorrelation is equal to a quantity of non-zero elements in a sequence, and a side lobe amplitude is 0.

The ternary sequence may generate a sequence set with periodic ZCZ via cyclic shift. The sequence in the periodic ZCZ sequence set serves as a transmitted sequence (which may also be referred to as a transmitted waveform sequence), so that a side lobe amplitude can be effectively reduced, to reduce interference between waveforms and increase an unambiguous distance. FIG. 3 is a diagram of a transmitted sequence according to an embodiment of this application. As shown in FIG. 3, the transmitted (transmitted) shown in FIG. 3 indicates a transmitted sequence, and the transmitted sequence is between two horizontal lines. Alternatively, the transmitted shown in FIG. 3 indicates a signal that is transmitted via a line of sight path and that is received by a receive end of a sensing signal. Each row represents a pulse burst, and each pulse burst has three pulses (pulses) (only used as an example). Each column in FIG. 3 represents a ternary sequence and a cyclic prefix and suffix thereof. A part between two horizontal lines represents a set of different cyclic shift sequences, a part above the first horizontal line is the cyclic prefix, and a part below the second horizontal line is the cyclic suffix. A length of the ternary sequence shown in FIG. 3 is 6 (that is, a quantity of elements in the ternary sequence is 6), cyclic shift bit quantities of the three sequences shown in FIG. 3 are sequentially 0 (a cyclic shift bit quantity of a first sequence relative to a reference sequence is 0), 2 (a cyclic shift bit quantity of a second sequence relative to the first sequence is 2), and 4 (a cyclic shift bit quantity of a third sequence relative to the first sequence is 2), and a length of the cyclic prefix and a length of the cyclic suffix are 2.

A transmit end transmits one pulse burst each time, and transmits a next pulse burst after a pulse burst repetition interval (burst repetition interval, BRI). Based on an autocorrelation characteristic of a sequence set, the receive end uses the ternary sequence and a shift sequence of the ternary sequence as a local sequence to perform correlation with a received signal, and implements sensing measurement based on information such as a peak position of the correlation. A masked target (masked target) shown in FIG. 3 may be understood as that delay time of a reflection path is close to delay time of a line of sight path, or delay time of a reflection path is less than delay time corresponding to a close-by target and a far-away target shown in FIG. 3. A reason why the receive end restores only two sequences based on the received signal is that the receive end has received a signal transmitted based on the reflection path before receiving all signals transmitted based on the line of sight path. As a result, the signal transmitted based on the line of sight path masks the signal transmitted based on the reflection path. The far-away target (far-away target) may be understood as a target far away from the transmit end. For example, after the transmit end sends a pulse burst, the receive end has not received the pulse burst, and the transmit end sends another pulse burst. As a result, the receive end may receive an echo of the previous pulse burst after the transmit end sends the another pulse burst. It may be understood that, the masked target, the close-by target (close-by target), and the far-away target shown in FIG. 3 may be understood as three targets detected based on the sensing signal, and the delay time of the reflection path increases in ascending order.

Generally, when a length of a cyclic prefix and a length of a cyclic suffix are fixed, the cyclic prefix and the cyclic suffix may be obtained based on a sequence between two horizontal lines shown in FIG. 3. Therefore, for ease of brevity, the transmitted sequence shown in embodiments of this application may be understood as a sequence between the horizontal lines shown in FIG. 3. It may be understood that a length of a sequence, a quantity of pulses included in a pulse burst, a length of a cyclic prefix, a length of a cyclic suffix, and the like shown in FIG. 3 are merely examples, and should not be construed as a limitation on embodiments of this application.

A relationship among a sequence (a sequence between two horizontal lines), a pulse burst, a pulse, and a sensing signal shown in FIG. 3 may be shown as follows:

Each column may represent a sequence, a length of the sequence is equal to a quantity of short bursts, and a quantity of sequences corresponds to a quantity of pulses in each short burst. A pulse in each short burst is determined by a corresponding element in each sequence. For example, if a length of a sequence is N, a pulse in an $i^{th}$ short burst is determined by an $i^{th}$ element in each sequence, where i is an integer greater than or equal to 1 and less than or equal to N. For example, if the $i^{th}$ element includes +1, a positive pulse is corresponded; if the $i^{th}$ element includes -1, a negative pulse is corresponded; and if the $i^{th}$ element includes 0, no pulse is corresponded. For another example, if the $i^{th}$ element includes

+1, a negative pulse is corresponded; if the ith element includes -1, a positive pulse is corresponded; and if the ith element includes 0, no pulse is corresponded. A pulse sent by the transmit end may be understood as a sensing signal. It may be understood that a plurality of pulses in a short burst may also be referred to as a pulse burst.

A cyclic prefix may be determined based on a length of the cyclic prefix and a sequence, and a cyclic suffix may be determined based on a length of the cyclic suffix and a sequence. For example, if a length of a cyclic prefix is x1, a quantity of short bursts corresponding to the cyclic prefix is x1, and a pulse in the short burst may be determined by a corresponding element of the cyclic prefix. For example, if a length of a cyclic suffix is x2, a quantity of short bursts corresponding to the cyclic suffix is x2, and a pulse in the short burst may be determined by a corresponding element of the cyclic suffix. If x1+x2=x, a quantity of short bursts sent by the transmit end in one sensing slot is N+x. x1, x2, and x are all positive integers.

The descriptions of the sequence, the pulse burst, the pulse, the sensing signal, the cyclic prefix, and the cyclic suffix shown herein are also applicable to the following.

In the foregoing pulse burst transmitting manner, relative cyclic shift bit quantities between any two adjacent sequences in the periodic ZCZ sequence set are the same. As shown in FIG. 3, a cyclic shift bit quantity of the second sequence relative to the first sequence is the same as a cyclic shift bit quantity of the third sequence relative to the second sequence. In other words, adjacent sequences in the periodic ZCZ sequence set are formed by performing cyclic shifts of a same quantity of bits on a ternary sequence sequentially relative to a previous sequence. Because the relative cyclic shift bit quantities between the adjacent sequences are the same, when a receive end of a sensing signal performs a related operation, side lobes are very likely to overlap. Consequently, a side lobe amplitude is high, the receive end cannot effectively determine a peak position, and a ZCZ cannot be effectively determined (that is, a position of the zero correlation zone cannot be accurately determined), resulting in low accuracy of the sensing result. In addition, because the relative cyclic shift bit quantities are the same and known, a communication apparatus that is not a true receive end is very likely to generate a correct local sequence, and obtains information about a target through listening after performing correlation with a received sequence, resulting in leakage of related information of the target.

In view of this, embodiments of this application provide a sensing-based communication method and an apparatus. Values of at least two relative cyclic shift bit quantities in relative cyclic shift bit quantities between adjacent sequences are different, to reduce a side lobe amplitude of a non-zero correlation zone, effectively improve accuracy of determining a position of a zero correlation zone, and improve accuracy of a sensing result. A case in which a side lobe amplitude of a non-zero correlation zone is high because relative cyclic shift bit quantities between any two adjacent sequences are the same is effectively improved, and accuracy of determining a position of a zero correlation zone is improved, to effectively improve accuracy of a sensing result. Optionally, values of at least two relative cyclic shift bit quantities in relative cyclic shift bit quantities between adjacent sequences are different, so that a communication apparatus that is not a true receive end cannot learn of a local sequence, to prevent the communication apparatus from obtaining information about a target through listening. This effectively improves leakage of related information of the target, and improves sensing security.

Before the method procedure provided in embodiments of this application is described, the following describes in detail relative cyclic shift bit quantities, a cyclic shift parameter (for example, M cyclic shift bit quantities), and control information that are shown in embodiments of this application.

1. Relative cyclic shift bit quantity

The relative cyclic shift bit quantity may be understood as a cyclic shift bit quantity of a sequence relative to another sequence. The two sequences shown herein may be understood as adjacent sequences in M sequences. For example, a jth sequence and a (j+1)th sequence in the M sequences are adjacent sequences, or a jth sequence and a (j-1)th sequence are also adjacent sequences. In addition, a first sequence and a last sequence in the M sequences are also adjacent sequences. Herein, j is an integer greater than or equal to 1 and less than or equal to M.

It may be understood that adjacent sequences in the M sequences include the last sequence and the first sequence in the M sequences. Therefore, the M sequences may correspond to M relative cyclic shift bit quantities. However, to help two communication parties effectively determine each of the M sequences, a cyclic shift bit quantity that corresponds to the first sequence and that are in the M cyclic shift bit quantities indicated by the cyclic shift parameter may be determined based on a cyclic shift bit quantity of the first sequence relative to a reference sequence. For example, when the cyclic shift parameter includes relative cyclic shift bit quantities between adjacent sequences in the M sequences, the cyclic shift parameter may not include a cyclic shift bit quantity of the first sequence relative to the last sequence. If the cyclic shift parameter includes the cyclic shift bit quantity of the first sequence relative to the last sequence, a cyclic shift bit quantity of a second sequence relative to the first sequence, and the like, the two communication parties cannot effectively determine any sequence in the M sequences based on the reference sequence. In related descriptions of specific values of relative cyclic shift bit quantities in embodiments of this application, the relative cyclic shift bit quantities may include the cyclic shift bit quantity of the first sequence relative to the last sequence, and the adjacent sequences may include the first sequence and the last sequence in the M sequences. However, in related descriptions of the relative cyclic shift bit quantities in the cyclic shift parameter, the relative cyclic shift bit quantities do not include the cyclic shift bit quantity of the first sequence relative to the last sequence.

Certainly, when the two communication parties can determine each of the M sequences based on the M relative cyclic shift bit quantities corresponding to the M sequences, the relative cyclic shift bit quantities in the cyclic shift parameter may include the cyclic shift bit quantity of the first sequence relative to the last sequence in the M sequences.

It should be noted that a person skilled in the art may understand that some feature descriptions (at least one of the second item to the fourth item shown below) about the relative cyclic shift bit quantities are further applicable to the following types of cyclic shift bit quantities: a cyclic shift bit quantity of a non-first sequence relative to the first sequence in the M sequences (for example, applicable to the second item and the fourth item), and a cyclic shift bit quantity of each sequence in the M sequences relative to the reference sequence (for example, applicable to the second item and the fourth item). Similarly, the feature description about the relative cyclic shift bit quantity is further applicable to: an offset between the M cyclic shift bit quantities and a cyclic shift bit quantity threshold (for example, applicable to the second item and the fourth item), offsets between relative cyclic shift bit quantities between adjacent sequences in the M sequences and a cyclic shift bit quantity threshold (for example, applicable to the second item to the fourth item), and the like. Examples are not listed one by one herein.

A value of the relative cyclic shift bit quantities shown in embodiments of this application may meet at least one of the following items:

First item: The relative cyclic shift bit quantities are greater than or equal to the cyclic shift bit quantity threshold (which may also be understood as that a value of the relative cyclic shift bit quantities is greater than or equal to a value of the cyclic shift bit quantity threshold), and the cyclic shift bit quantity threshold is determined based on an interval between adjacent short bursts.

For example, the cyclic shift bit quantity threshold is determined based on the interval between adjacent short bursts and a speed of light. For example, the cyclic shift bit quantity threshold is determined based on the interval between adjacent short bursts, the speed of light, and a sensing range. The sensing range may be understood as a sensing range of a sensing signal, or a sensing range determined by the two communication parties based on prior information. A specific value of the sensing range is not limited in embodiments of this application. The cyclic shift bit quantity threshold may also be referred to as a minimum cyclic shift bit quantity or the like. It may be understood that the relative cyclic shift bit quantities are greater than or equal to the cyclic shift bit quantity threshold, but a smallest value in the M relative cyclic shift bit quantities determined based on the M cyclic shift bit quantities (namely, an actual smallest relative cyclic shift bit quantity corresponding to the M cyclic shift bit quantities) is not necessarily the cyclic shift bit quantity threshold, for example, may be greater than the cyclic shift bit quantity threshold.

For example, the cyclic shift bit quantity threshold may meet the following formula:

$$N_{min} \geq \frac{2R}{c * BRI}$$

$N_{min}$ represents the cyclic shift bit quantity threshold, R represents the sensing range, c represents the speed of light, and BRI represents an interval between pulse bursts. It may be understood that the interval between pulse bursts may be understood as an interval between adjacent short bursts.

It should be noted that the jth sequence and the (j+1)th sequence in the M sequences are adjacent sequences, the jth sequence and the (j-1)th sequence are adjacent sequences, and the last sequence in the M sequences and the first sequence in the M sequences are also adjacent sequences.

Second item: The first short burst has a good autocorrelation characteristic.

The first short burst shown herein does not include a short burst corresponding to a cyclic prefix, does not include a short burst corresponding to a cyclic suffix, and may be understood as a short burst that is in the M sequences and that is determined by a first element in each sequence. The first short burst in a period has a good autocorrelation characteristic. For example, the period may be understood as duration that corresponds to the M sequences and that is determined based on the cyclic shift parameter in the control information. For example, a sum of the period, time corresponding to the cyclic prefix, and time corresponding to the cyclic suffix may be collectively referred to as a sensing slot (sensing slot). For example, in one sensing slot, the transmit end of the sensing signal may send pulses in 10 short bursts corresponding to the three sequences shown in FIG. 3. For another example, in one sensing slot, the transmit end of the sensing signal may send pulses in N+x short bursts corresponding to the M sequences, where N represents a length of the sequence, and x represents a sum of lengths of the cyclic prefix and the cyclic suffix.

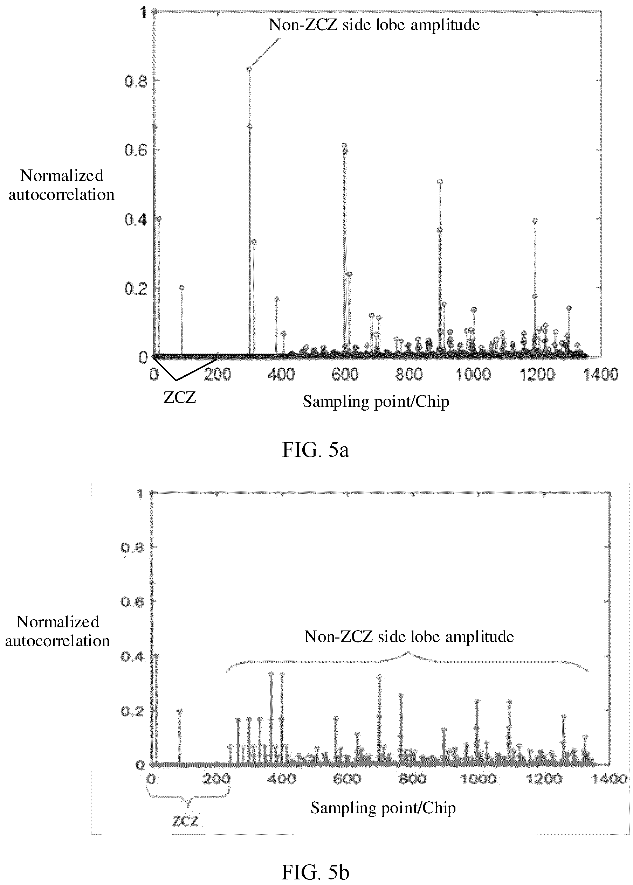

A good autocorrelation characteristic may be understood as that a ratio of a main lobe amplitude to a side lobe amplitude is greater than or equal to a threshold. A specific value of the threshold is not limited in embodiments of this application. The first short burst has a good autocorrelation characteristic, so that the receive end can more easily find a position at which a line of sight path arrives. Therefore, after finding the position (an origin shown in FIG. 5a and FIG. 5b) at which the line of sight path arrives, the receive end may delete a previous buffer (buffer) at the position of the line of sight path, to effectively reduce a buffer size of the receive end. It may be understood that after the receive end determines, based on the first short burst, the position at which the line of sight path arrives, a position of a subsequent short burst may be determined. Therefore, an autocorrelation characteristic of the subsequent short burst is not limited in embodiments of this application.

Third item: At least two relative cyclic shift bit quantities in the relative cyclic shift bit quantities between the adjacent sequences in the M sequences may be different.

If same relative cyclic shift bit quantities are used between adjacent sequences, a side lobe amplitude of a non-zero correlation zone is high, as shown in FIG. 5a, FIG. 5a shows a normalized autocorrelation result of a receive end. In FIG. 5a, a horizontal coordinate represents a sampling point (which may also be a timeshift), a unit is a chip, and a vertical coordinate represents a normalized autocorrelation result. It can be seen from FIG. 5a that, in a zero correlation zone, in addition to a line of sight (line of sight, LOS) path (as shown in FIG. 5a at a position of an origin), there are three non-line of sight (non-line of sight, NLOS) paths, which respectively correspond to three targets. In a non-zero correlation zone, there are some autocorrelation side lobes in addition to a LOS path and an NLOS path. Therefore, a receive end needs to search for a position of a highest peak, determine a start position of the ZCZ based on the position of the highest peak, and obtain a length of the ZCZ based on the smallest cyclic shift bit quantity in the relative cyclic shift bit quantities and an interval between adjacent short bursts, so as to obtain an accurate position of the ZCZ, and obtain information such as a quantity of targets and a distance of a target. However, when there are non-ideal factors such as noise, a side lobe amplitude may be higher than a main lobe amplitude. Consequently, the receive end cannot effectively determine the accurate position of the ZCZ, and accuracy of sensing by the receive end is reduced. For example, the length of the ZCZ in FIG. 5a may be equal to the smallest cyclic shift bit quantity in the relative cyclic shift bit quantities*interval between adjacent short bursts/2. For example, the length of the ZCZ may be equal to the smallest cyclic shift bit quantity in the relative cyclic shift bit quantities*interval between adjacent short bursts*speed of light/2.

However, in embodiments of this application, a case in which relative cyclic shift bit quantities of a same quantity of bits are used is effectively improved. FIG. 5b is a diagram of a normalized autocorrelation result of a receive end when at least two different relative cyclic shift bit quantities are included. It can be seen from FIG. 5b that, by using different relative cyclic shift bit quantities, a side lobe amplitude of a non-ZCZ is effectively reduced. Therefore, the receive end can effectively find a highest peak. This effectively ensures that the receive end can accurately determine the ZCZ, and improves accuracy of sensing by the receive end.

Fourth item: In different sensing slots, cyclic shift bit quantities may change.

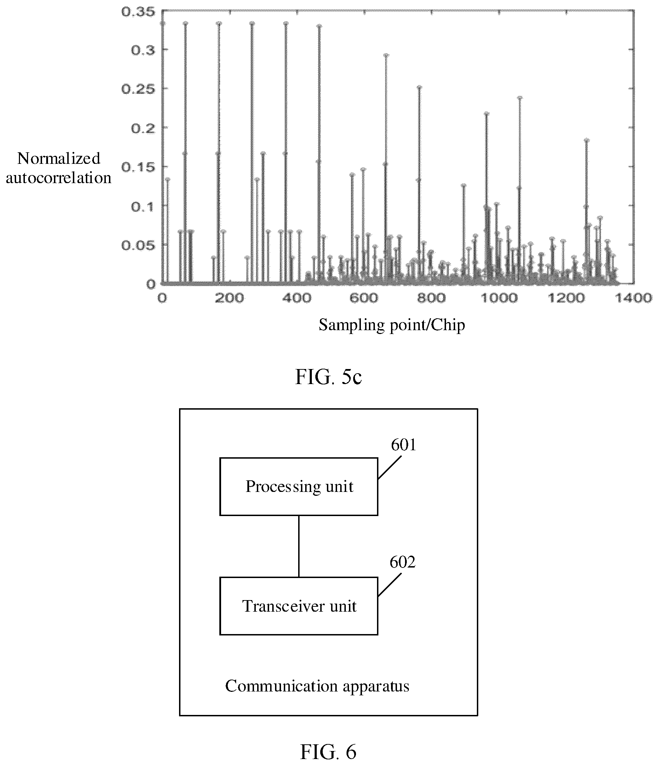

It may be understood that, when the cyclic shift bit quantities change, if M cyclic shift bit quantities locally stored by a receive end are inconsistent with those stored by a transmit end, the receive end cannot effectively extract related information of a target. As shown in FIG. 5c, the scenario shown in FIG. 5c is consistent with that shown in FIG. 5a, and includes three targets. However, because the M cyclic shift bit quantities stored by two communication parties are different, the ZCZ in FIG. 5c includes a plurality of peaks. Consequently, the receive end cannot distinguish an effective target.

Therefore, in embodiments of this application, the two communication parties may obtain a cyclic shift bit quantity based on control information, or obtain a cyclic shift bit quantity, a reference sequence, a quantity of pulses in a short burst, and the like based on control information, to ensure consistency of information obtained by the two communication parties. For example, M cyclic shift bit quantities indicated by a cyclic shift parameter may remain unchanged, or M cyclic shift bit quantities indicated by cyclic shift parameter may change in different sensing slots. A quantity of sensing slots is not limited in embodiments of this application. Generally, the quantity of sensing slots may be agreed on by the two communication parties, or may be defined in a protocol. Examples are not listed one by one.

In embodiments of this application, a true receive end (for example, a legal communication apparatus) may obtain a cyclic shift bit quantity based on control information. However, a non-true receive end (an illegal listening device) cannot effectively obtain the cyclic shift bit quantity, and therefore effectively obtains M sequences and cannot extract information about a target. This effectively improves sensing security and effectively protects related information of the target.

A value of the cyclic shift bit quantity determined based on at least one of the first item to the third item described above falls within the protection scope of embodiments of this application. For example, Table 1 shows different examples of cyclic shift bit quantities provided in embodiments of this application. A first bit quantity in the cyclic shift bit quantities shown in Table 1 is a cyclic shift bit quantity of a sequence relative to a reference sequence, and another bit quantity is a cyclic shift bit quantity of a corresponding sequence relative to the reference sequence. For example, the reference sequence shown in Table 1 is {1,1,1,1,1,-1,1,1,0,-1,1,-1,0,-1,-1,-1,1,1,-1,-1,0,1,-1,1,1,-1,-1,1,1,0,-1,1,-1,1,0,0,1,0,1,1,1,1,-1,-1,-1,1,1,0, 1,1,1,-1,-1,-1,1,1,-1,1,-1}. A first row of cyclic shift bit quantities is used as an example. A sequence length is 57 (excluding a cyclic prefix and a cyclic suffix), M=4, a cyclic shift bit quantity of a first sequence relative to the reference sequence is 1, and a cyclic shift bit quantity of a second sequence relative to the reference sequence is 14, in other words, a relative cyclic shift bit quantity of the second sequence relative to the first sequence is 13. A cyclic shift bit quantity of a third sequence relative to the reference sequence is 23. In other words, a relative cyclic shift bit quantity of the third sequence relative to the second sequence is 9. A cyclic shift bit quantity of a fourth sequence relative to the reference sequence is 35, and a relative cyclic shift bit quantity of the fourth sequence relative to the third sequence is 12. The first sequence and the fourth sequence are also adjacent sequences, and a cyclic shift bit quantity of the first sequence relative to the fourth sequence are 23.

It may be understood that Table 1 is shown by using an example in which a sequence length is 57, that is, 57 elements (the elements include +1, 0, and -1) are included, and a short burst includes 4 to 8 pulses. However, this should not be construed as a limitation on embodiments of this application.

It may be understood that the cyclic shift bit quantities shown in Table 1 are merely an example. When a sequence length is 57 and a short burst includes four pulses, the cyclic shift bit quantities may further have other values. Examples are not listed one by one. An example of a sequence of another length, a quantity of pulses, and cyclic shift bit quantities is not shown in embodiments of this application.

Table 1

| Sequence length | Quantity of pulses in a short burst | Cyclic shift bit quantities | | | |
|---|---|---|---|---|---|
| 57 | 4 | 1 | 14 | 23 | 35 |
| | | 1 | 15 | 22 | 31 |
| | | 2 | 15 | 29 | 37 |
| | | 2 | 15 | 29 | 40 |
| | | 3 | 21 | 33 | 49 |
| | | 3 | 21 | 33 | 50 |
| | | 4 | 23 | 43 | 50 |

| Sequence length | Quantity of pulses in a short burst | Cyclic shift bit quantities | | |
|---|---|---|---|---|
| | | 4 | 24 | 31 40 |
| | | 5 | 21 | 37 44 |
| | | 5 | 21 | 37 45 |
| | | 6 | 19 | 29 49 |
| | | 6 | 19 | 29 50 |
| | | 7 | 35 | 42 50 |
| | | 7 | 35 | 43 50 |
| | | 8 | 15 | 22 29 |
| | | 8 | 15 | 22 31 |
| | | 9 | 35 | 42 50 |
| | | 9 | 35 | 43 50 |
| | | 11 | 19 | 26 33 |
| | | 11 | 19 | 26 35 |
| | | 14 | 21 | 28 37 |
| | | 14 | 21 | 28 40 |
| | | 15 | 33 | 41 48 |
| | | 15 | 36 | 43 50 |
| | | 16 | 23 | 30 37 |
| | | 16 | 23 | 30 40 |
| | | 17 | 33 | 41 48 |
| | | 17 | 36 | 43 50 |
| | | 19 | 26 | 33 41 |
| | | 19 | 26 | 33 42 |
| | | 20 | 35 | 42 50 |
| | | 20 | 35 | 43 50 |
| | | 21 | 28 | 35 42 |
| | | 21 | 28 | 35 43 |
| | | 22 | 33 | 41 48 |
| | | 22 | 36 | 43 50 |
| | | 23 | 30 | 37 44 |
| | | 23 | 30 | 37 45 |
| | | 25 | 33 | 41 48 |
| | | 25 | 36 | 43 50 |
| | | 26 | 33 | 40 48 |

| Sequence length | Quantity of pulses in a short burst | Cyclic shift bit quantities |
|---|---|---|
| | | 26 33 41 49 |
| | | 28 36 43 50 |
| | | 29 36 43 50 |
| 57 | 5 | 1 28 36 43 50 |
| | | 1 29 36 43 50 |
| | | 2 9 16 25 36 |
| | | 2 9 16 25 39 |
| | | 3 25 33 41 48 |
| | | 3 26 33 40 48 |
| | | 4 11 21 28 35 |
| | | 4 11 21 28 37 |
| | | 5 25 33 41 48 |
| | | 5 26 33 40 48 |
| | | 6 14 23 31 39 |
| | | 6 14 23 31 41 |
| | | 7 28 36 43 50 |
| | | 7 29 36 43 50 |
| | | 8 15 23 30 39 |
| | | 8 15 23 30 41 |
| | | 9 28 36 43 50 |
| | | 9 29 36 43 50 |
| | | 11 19 26 33 41 |
| | | 11 19 26 33 42 |
| | | 14 28 36 43 50 |
| | | 14 29 36 43 50 |
| | | 15 22 29 36 46 |
| | | 15 22 29 36 48 |
| | | 16 28 36 43 50 |
| | | 16 29 36 43 50 |
| | | 17 24 31 40 48 |
| | | 17 24 32 40 48 |
| | | 19 28 36 43 50 |
| | | 19 29 36 43 50 |
| | | 20 28 36 43 50 |

| Sequence length | Quantity of pulses in a short burst | Cyclic shift bit quantities | | | | | |
|---|---|---|---|---|---|---|---|
| | | 20 | 29 | 36 | 43 | 50 | |
| 57 | 6 | 0 | 7 | 14 | 23 | 31 | 39 |
| | | 0 | 7 | 14 | 23 | 31 | 41 |
| | | 1 | 8 | 16 | 23 | 31 | 41 |
| | | 1 | 8 | 16 | 23 | 31 | 42 |
| | | 2 | 9 | 16 | 24 | 37 | 50 |
| | | 2 | 9 | 16 | 24 | 40 | 47 |
| | | 3 | 11 | 21 | 30 | 42 | 50 |
| | | 3 | 11 | 21 | 30 | 43 | 50 |
| | | 4 | 13 | 22 | 33 | 40 | 50 |
| | | 4 | 13 | 25 | 32 | 40 | 47 |
| | | 5 | 16 | 29 | 36 | 43 | 50 |
| | | 5 | 17 | 24 | 31 | 38 | 46 |
| | | 6 | 13 | 20 | 30 | 39 | 48 |
| | | 6 | 13 | 20 | 30 | 41 | 48 |
| | | 7 | 15 | 22 | 32 | 40 | 49 |
| | | 7 | 15 | 22 | 32 | 40 | 50 |
| | | 8 | 20 | 28 | 36 | 43 | 50 |
| | | 8 | 20 | 29 | 36 | 43 | 50 |
| | | 9 | 16 | 23 | 30 | 37 | 44 |
| | | 9 | 16 | 23 | 30 | 37 | 45 |
| | | 10 | 20 | 28 | 36 | 43 | 50 |
| | | 10 | 20 | 29 | 36 | 43 | 50 |
| | | 11 | 18 | 26 | 33 | 41 | 49 |
| | | 11 | 18 | 26 | 33 | 41 | 50 |
| | | 12 | 20 | 28 | 36 | 43 | 50 |
| | | 12 | 20 | 29 | 36 | 43 | 50 |
| | | 13 | 20 | 28 | 36 | 43 | 50 |
| | | 13 | 20 | 29 | 36 | 43 | 50 |
| 57 | 7 | 1 | 8 | 16 | 25 | 32 | 39 | 46 |
| | | 1 | 8 | 16 | 25 | 32 | 39 | 48 |
| | | 1 | 8 | 16 | 25 | 32 | 41 | 48 |
| | | 1 | 8 | 16 | 25 | 33 | 41 | 48 |
| | | 1 | 9 | 16 | 25 | 32 | 39 | 46 |

| Sequence length | Quantity of pulses in a short burst | Cyclic shift bit quantities | | | | | | | |
|---|---|---|---|---|---|---|---|---|---|
| | | 1 | 9 | 16 | 25 | 32 | 39 | 48 | |
| | | 1 | 9 | 16 | 25 | 32 | 41 | 48 | |
| | | 1 | 9 | 16 | 25 | 33 | 41 | 48 | |
| | | 2 | 9 | 16 | 25 | 32 | 39 | 46 | |
| | | 2 | 9 | 16 | 25 | 32 | 39 | 48 | |
| | | 2 | 9 | 16 | 25 | 32 | 41 | 48 | |
| | | 2 | 9 | 16 | 25 | 33 | 41 | 48 | |
| | | 3 | 11 | 21 | 28 | 36 | 43 | 50 | |
| | | 3 | 11 | 21 | 29 | 36 | 43 | 50 | |
| | | 3 | 11 | 22 | 29 | 36 | 43 | 50 | |
| | | 3 | 14 | 21 | 28 | 36 | 43 | 50 | |
| | | 3 | 14 | 21 | 29 | 36 | 43 | 50 | |
| | | 3 | 14 | 22 | 29 | 36 | 43 | 50 | |
| | | 4 | 11 | 21 | 28 | 36 | 43 | 50 | |
| | | 4 | 11 | 21 | 29 | 36 | 43 | 50 | |
| | | 4 | 11 | 22 | 29 | 36 | 43 | 50 | |
| | | 4 | 14 | 21 | 28 | 36 | 43 | 50 | |
| | | 4 | 14 | 21 | 29 | 36 | 43 | 50 | |
| | | 4 | 14 | 22 | 29 | 36 | 43 | 50 | |
| | | 5 | 14 | 21 | 28 | 36 | 43 | 50 | |
| | | 5 | 14 | 21 | 29 | 36 | 43 | 50 | |
| | | 5 | 14 | 22 | 29 | 36 | 43 | 50 | |
| 57 | 8 | 0 | 7 | 14 | 21 | 28 | 36 | 43 | 50 |
| | | 0 | 7 | 14 | 21 | 29 | 36 | 43 | 50 |
| | | 0 | 7 | 14 | 22 | 29 | 36 | 43 | 50 |

The foregoing descriptions about the relative cyclic shift bit quantities are all applicable to the following, and details are not described in the following.

2. Cyclic shift parameter

The cyclic shift parameter indicates M cyclic shift bit quantities, and the M cyclic shift bit quantities correspond to M sequences. That the M cyclic shift bit quantities correspond to M sequences may be understood as follows: There is a correspondence between the M cyclic shift bit quantities and the M sequences; or the M cyclic shift bit quantities may be used to determine the M sequences; or a cyclic shift bit quantity between sequences in the M sequences is determined by the M cyclic shift bit quantities. For example, when M is greater than or equal to 2, a $j^{th}$ cyclic shift bit quantity in the M cyclic shift bit quantities may correspond to a $j^{th}$ sequence in the M sequences. For example, a cyclic shift bit quantity of the $j^{th}$

sequence relative to a sequence is equal to the $j^{th}$ cyclic shift bit quantity, and j is an integer greater than or equal to 1 and less than or equal to M. For the M sequences, the sequence may include at least one of a reference sequence, a $(j-1)^{th}$ sequence, a $(j+1)^{th}$ sequence, and a first sequence. In an example, the sequence may be a $(j-1)^{th}$ sequence in the M sequences. In another example, the sequence may be the first sequence in the M sequences. In still another example, the sequence may be the reference sequence. It may be understood that, regardless of how the sequence is set, at least two relative cyclic shift bit quantities in relative cyclic shift bit quantities between adjacent sequences in the M sequences corresponding to the M cyclic shift bit quantities are different. Alternatively, it may be understood that at least two relative cyclic shift bit quantities in relative cyclic shift bit quantities between adjacent sequences in the M sequences that are determined based on the cyclic shift parameter are different.

In embodiments of this application, a cyclic shift bit quantity of the $j^{th}$ sequence relative to a sequence may be a left-cyclic-shift bit quantity of the $j^{th}$ sequence relative to the sequence, or a right-cyclic-shift bit quantity of the $j^{th}$ sequence relative to the sequence. Generally, the M cyclic shift bit quantities are all left-cyclic-shift bit quantities, or are all right-cyclic-shift bit quantities.

It may be understood that the cyclic shift parameter shown above may also be understood as follows: The cyclic shift parameter indicates the M cyclic shift bit quantities corresponding to the M sequences; or the cyclic shift parameter indicates cyclic shift bit quantities corresponding to the M sequences.

It may be understood that, cyclic shift sequences of the M sequences determined by the two communication parties based on the cyclic shift parameter, reversed sequences of the M sequences, inverted sequences of the M sequences, or the like may be used as transmitted sequences, provided that the two communication parties have a consistent understanding of the transmitted sequence.

For example, M=1, that is, the cyclic shift parameter indicates one cyclic shift bit quantity, and the cyclic shift bit quantity is a cyclic shift bit quantity of a sequence relative to the reference sequence. In an example, the reference sequence may be determined based on at least one of a sequence identifier and a sequence length in control information. For example, the control information may further include a sequence identifier, and the sequence identifier may indicate the reference sequence. For another example, the control information may further include a sequence length, and the sequence length may indicate a length of the reference sequence. For example, if a sequence length is 57 (that is, there are 57 elements in the sequence), the two communication parties may determine that a length of the reference sequence is 57, so as to search a ternary sequence for a sequence whose length is 57, or search for a sequence whose length is 57 from a sequence having a complete periodic autocorrelation characteristic. The control information includes at least one of the sequence length or the sequence identifier, so that the two communication parties can clearly learn of the reference sequence based on the sequence length or the sequence identifier. This improves interaction efficiency of the two communication parties. In another example, the reference sequence may be indicated by control information before the control information shown in step 401. For example, to reduce signaling overheads, when the reference sequence remains unchanged, the two communication parties may determine the reference sequence based on control information that includes at least one of the sequence length or the sequence identifier and that is before the control information shown in step 401. In still another example, the reference sequence may be a sequence obtained after negotiation between the two communication parties, or may be a sequence defined in a protocol. A method for setting the reference sequence is not limited in embodiments of this application.

For example, when M=1, that the cyclic shift parameter indicates one cyclic shift bit quantity includes: The cyclic shift parameter includes an offset of the cyclic shift bit quantity relative to a value. The value may be agreed on by the two communication parties, or may be defined by a protocol. This is not limited in embodiments of this application. The cyclic shift bit quantity of the sequence relative to the reference sequence is indicated by an offset, so that signaling overheads can be effectively reduced. For another example, the cyclic shift parameter may include the cyclic shift bit quantity of the sequence relative to the reference sequence. In this manner, the two communication parties can clearly learn of the cyclic shift bit quantity, which is simpler. For another example, the cyclic shift parameter may include information about a random number generation algorithm and a quantity of bits of a random number. A plurality of bits are generated by using the random number generation algorithm, and then a specific quantity of bits (consistent with a quantity of bits indicated in the cyclic shift parameter) are selected from the plurality of bits. A value (for example, a decimal value) represented by the specific quantity of bits is a cyclic shift bit quantity. For example, the two communication parties may use the value represented by the specific quantity of bits as the cyclic shift bit quantity of the sequence relative to the reference sequence; or the two communication parties may use a sum of the value represented by the specific quantity of bits and a cyclic shift bit quantity threshold as the cyclic shift bit quantity of the sequence relative to the reference sequence. Determining the cyclic shift bit quantity by using the random number generation algorithm has higher security.

In embodiments of this application, when M=1, the two communication parties have a consistent understanding of the cyclic shift bit quantity by using the control information. This effectively avoids a case in which a sensing result is inaccurate because the two communication parties have inconsistent understandings of the cyclic shift bit quantity, and improves accuracy of the sensing result.

For example, M=2, that is, the cyclic shift parameter indicates two cyclic shift bit quantities. For example, the two cyclic shift bit quantities include a cyclic shift bit quantity of one of the two sequences relative to the reference sequence and a relative cyclic shift bit quantity between the two sequences. For another example, the M cyclic shift bit quantities include cyclic shift bit quantities of sequences in the M sequences relative to the reference sequence. It may be understood that, when M=2, for a manner in which the cyclic shift parameter indicates the M cyclic shift bit quantities, refer to the following description when M is greater than 2.

For example, M is greater than 2, the cyclic shift parameter indicates the M cyclic shift bit quantities, and at least two relative cyclic shift bit quantities in relative cyclic shift bit quantities between adjacent sequences in the M sequences corresponding to the M cyclic shift bit quantities are different.

In an example, a cyclic shift bit quantity of the first sequence in the M sequences relative to the reference sequence may be a first bit quantity in the M cyclic shift bit quantities. For another example, a cyclic shift bit quantity of a second sequence relative to the first sequence in the M sequences is a second bit quantity. For another example, a cyclic shift bit quantity of a third sequence relative to the second sequence in the M sequences is a third bit quantity. For another example, a cyclic shift bit quantity of a fourth sequence relative to the third sequence in the M sequences is a third bit quantity. By analogy, examples are not listed one by one herein.

In another example, a cyclic shift bit quantity of the first sequence in the M sequences relative to the reference sequence may be a first bit quantity in the M cyclic shift bit quantities. For another example, a cyclic shift bit quantity of a second sequence in the M sequences relative to the first sequence (or the reference sequence) is a second bit quantity. For another example, a cyclic shift bit quantity of a third sequence in the M sequences relative to the first sequence (or the reference sequence) is a third bit quantity. For another example, a cyclic shift bit quantity of a fourth sequence relative to the first sequence (or the reference sequence) in the M sequences is a third bit quantity. By analogy, examples are not listed one by one herein.

That the cyclic shift parameter indicates the M cyclic shift bit quantities may include the following manners:
In an example, the cyclic shift parameter may include M cyclic shift bit quantities, and the M cyclic shift bit quantities include relative cyclic shift bit quantities between adjacent sequences in the M sequences. For example, the M cyclic shift bit quantities may be sequentially a cyclic shift bit quantity of the first sequence in the M sequences relative to the reference sequence, a cyclic shift bit quantity of a second sequence relative to the first sequence in the M sequences, a cyclic shift bit quantity of a third sequence relative to the second sequence in the M sequences, ..., and a cyclic shift bit quantity of an $M^{th}$ sequence relative to an $(M-1)^{th}$ sequence in the M sequences. Alternatively, the cyclic shift parameter may include M cyclic shift bit quantities, and the M cyclic shift bit quantities may be a cyclic shift bit quantity of the first sequence relative to the reference sequence and cyclic shift bit quantities of adjacent sequences in the M sequences.

For example, Table 2 shows a cyclic shift parameter according to an embodiment of this application.

Table 2

| Quantity of bits (Bits): 0 to 5 | 6 to 11 | ... | 6*(M-1) to 6*M |
|---|---|---|---|
| Cyclic shift bit quantity of sequence 1 (No. of cyclic shift of sequence 1) | Cyclic shift bit quantity of sequence 2 | ... | Cyclic shift bit quantity of sequence M |

It may be understood that the sequence 1 shown in Table 2 represents the first sequence in the M sequences, the sequence 2 represents the second sequence in the M sequences, and by analogy, the sequence M represents the $M^{th}$ sequence in the M sequences.

For example, the cyclic shift bit quantity of the sequence 1 may be a cyclic shift bit quantity of the sequence 1 relative to the reference sequence, or an offset between the cyclic shift bit quantity of the sequence 1 relative to the reference sequence and a cyclic shift bit quantity threshold (or a first cyclic shift bit quantity), or the like. A cyclic shift bit quantity of the sequence 2 may be a cyclic shift bit quantity of the sequence 2 relative to the sequence 1, or an offset between the cyclic shift bit quantity of the sequence 2 relative to the sequence 1 and the cyclic shift bit quantity threshold (or the first cyclic shift bit quantity), or the like. A cyclic shift bit quantity of the sequence 3 may be a cyclic shift bit quantity of the sequence 3 relative to the sequence 2, or a cyclic shift bit quantity of the sequence 3 relative to the sequence 1, or an offset between the cyclic shift bit quantity of the sequence 3 relative to the sequence 2 and the cyclic shift bit quantity threshold (or the first cyclic shift bit quantity), or an offset between the cyclic shift bit quantity of the sequence 3 relative to the sequence 1 and the cyclic shift bit quantity threshold (or the first cyclic shift bit quantity). By analogy, examples are not listed one by one herein.

In another example, the cyclic shift parameter may include a cyclic shift bit quantity of a non-first sequence relative to the first sequence in the M sequences and a cyclic shift bit quantity of a first sequence relative to the reference sequence. For example, the cyclic shift parameter includes the cyclic shift bit quantity of the first sequence in the M sequences relative to the reference sequence, a cyclic shift bit quantity of a second sequence relative to the first sequence in the M sequences, a cyclic shift bit quantity of a third sequence relative to the first sequence in the M sequences, and the like. In other words, the cyclic shift parameter may include the cyclic shift bit quantity of the first sequence in the M sequences relative to the reference sequence and the cyclic shift bit quantity of the non-first sequence relative to the first sequence in the M sequences.

In still another example, the cyclic shift parameter includes an offset between the cyclic shift bit quantity of the non-first sequence relative to the first sequence in the M sequences and the cyclic shift bit quantity threshold, and an offset between the cyclic shift bit quantity of the first sequence relative to the reference sequence and the cyclic shift bit quantity threshold. For example, the cyclic shift parameter may include an offset between the cyclic shift bit quantity of the first sequence in the M sequences relative to the reference sequence and the cyclic shift bit quantity threshold, an offset between the cyclic shift bit quantity of the second sequence relative to the first sequence in the M sequences and the cyclic shift bit quantity threshold, an offset between the cyclic shift bit quantity of the third sequence relative to the first sequence in the M sequences and the cyclic shift bit quantity threshold, and the like.

In still another example, the cyclic shift parameter may include offsets between relative cyclic shift bit quantities of adjacent sequences in the M sequences and the cyclic shift bit quantity threshold, and an offset between the cyclic shift bit quantity of the first sequence relative to the reference sequence and the cyclic shift bit quantity threshold. For example, the cyclic shift parameter may include an offset between the cyclic shift bit quantity of the first sequence in the M sequences relative to the reference sequence and the cyclic shift bit quantity threshold, an offset between the cyclic shift bit quantity of the second sequence relative to the first sequence in the M sequences and the cyclic shift bit quantity threshold, an offset between the cyclic shift bit quantity of the third sequence relative to the second sequence in the M sequences and the cyclic shift bit quantity threshold, and the like.

It may be understood that, in the foregoing offset manner, the cyclic shift bit quantity threshold is merely an example. For example, the cyclic shift bit quantity threshold may be replaced with the cyclic shift bit quantity of the first sequence relative to the reference sequence. For example, if the cyclic shift bit quantity of the first sequence in the M sequences relative to the reference sequence is a first cyclic shift bit quantity, the cyclic shift parameter may include 0, an offset between the cyclic shift bit quantity of the second sequence relative to the first sequence in the M sequences and the first cyclic shift bit quantity, an offset between the cyclic shift bit quantity of the third sequence relative to the first sequence in the M sequences and the first cyclic shift bit quantity, and the like. For example, the cyclic shift parameter may include 0, an offset between the cyclic shift bit quantity of the second sequence relative to the first sequence in the M sequences and the first cyclic shift bit quantity, an offset between the cyclic shift bit quantity of the third sequence relative to the second sequence in the M sequences and the first cyclic shift bit quantity, and the like.

It may be understood that, when the M cyclic shift bit quantities are indicated by using an offset, the control information may include the cyclic shift bit quantity threshold or the first cyclic shift bit quantity. The control information includes the cyclic shift bit quantity threshold and the first cyclic shift bit quantity, so that the two communication parties can effectively learn of a specific manner of determining the M cyclic shift bit quantities.

The M cyclic shift bit quantities are indicated by using an offset, so that signaling overheads can be effectively reduced.

In still another example, the cyclic shift parameter includes the information about the random number generation algorithm and the quantity of bits of the random number, and the random number generation algorithm and the quantity of bits of the random number are used to determine the M cyclic shift bit quantities. In other words, the two communication parties generate some random numbers based on the random number generation algorithm, and these random numbers may be used as the cyclic shift bit quantities of the M sequences. It may be understood that random numbers generated by the transmit end and the receive end need to be consistent. Therefore, when the cyclic shift parameter is not updated based on the control information, the two communication parties may generate a same random number by using the random number generation algorithm.

A seed is configured, and the transmit end and the receive end generate a same random number by using the seed, and determine cyclic shift bit quantities based on the random number and a quantity of bits of the random number, as shown in Table 3.

Table 3

| Quantity of bits: 0 | 1 to 7 | Quantity of bytes: 0/32 | Quantity of bytes: Variable |
|---|---|---|---|
| Seed type (seed type) | Quantity of random bits (No. of random Bits) | STS parameter | LFSR parameter |

The seed type indicates a random number generation algorithm. For example, when a value of the seed type is 0, it indicates that a random number is generated by using a scrambled timestamp sequence (scrambled timestamp sequence, STS) (for example, an AES-128 algorithm); or when a value of the seed type is 1, it indicates that a random number is generated by using a linear feedback shift register (linear feedback shift register, LFSR).

The quantity of random bits indicates a quantity of bits corresponding to a cyclic shift bit quantity. The two communication parties may determine a cyclic shift bit quantity of each sequence based on a random number generated by using a random number generation algorithm and the quantity of random bits.

The STS parameter (STS Parameter) corresponds to the seed type. For example, the seed type indicates that the STS parameter exists when a random number is generated by using the STS. For example, when a value of the seed type is 0, the STS parameter exists, where Octets 0 to 11 represent StsVUpper96, Octets 12 to 15 represent StsVCounter, and Octets 16 to 31 represent an STS key (StsKey). StsVUpper96 and StsVCounter constitute 128-bit (for example, AES-128 is 128 bits) STS data. When a value of the seed type is 1, the STS parameter does not exist.

The LFSR parameter (LFSR Parameter) corresponds to the seed type. For example, the seed type indicates that the LFSR parameter exists when a random number is generated by using the LFSR. For example, when a value of the seed type is 1, the LFSR parameter exists. The LFSR parameter in Table 3 may indicate an initial state of the LFSR, and a quantity of bits included in the initial state is equal to a quantity of shift registers in the LFSR. When a value of the seed type is 0, the LFSR parameter does not exist.

For example, when a value of the seed type is 0, the two communication parties may generate a 128-bit output based on an input of the STS parameter, then sequentially select, from the 128 bits, a quantity of bits that are consistent with the quantity of random bits, and determine a cyclic shift bit quantity based on the quantity of bits that are consistent with the quantity of random bits. For example, if the quantity of random bits is 4 bits, the two communication parties may sequentially select four bits from the 128 bits, and every four bits sequentially correspond to the M cyclic shift bit quantities. For example, the M cyclic shift bit quantities may be equal to a sum of the cyclic shift bit quantity threshold and a value represented by an output random number. For another example, when a value of the seed type is 1, one bit is generated each time based on an input of the LFSR parameter, and a cyclic shift bit quantity is determined based on a quantity of bits corresponding to the quantity of random bits. For example, if the quantity of random bits is 4 bits, the two communication parties may sequentially select four bits from an output of the LFSR, and every four bits sequentially correspond to the M cyclic shift bit quantities. Alternatively, the M cyclic shift bit quantities may be equal to a sum of the cyclic shift bit quantity threshold and a value represented by every four bits.

For example, differences between relative cyclic shift bit quantities between adjacent sequences in the M sequences and the cyclic shift bit quantity threshold may be sequentially represented as $R_1$, $R_2$, ..., and $R_M$, and the M cyclic shift bit quantities may meet the following formula:

$$N_{min} * M + \sum_i^M R_i \leq N$$

Nmin represents the cyclic shift bit quantity threshold, M represents a quantity of sequences, and N represents a length of the sequence. For example, R1 represents a difference between a cyclic shift bit quantity of a sequence relative to the reference sequence and the cyclic shift bit quantity threshold.

It can be learned from the foregoing formula that a value B of the quantity of random bits may meet the following formula:

$$B = \left\lfloor log_2 \left( \frac{N - N_{min} * M}{M} \right) \right\rfloor$$

For a description of each parameter, refer to the foregoing formula. Details are not described herein again.

3. Control information

The control information may be included in a physical layer (physical layer, PHY) protocol data unit (protocol data unit, PPDU). The control information may be referred to as a pulse burst sensing configuration information element (information element, IE) or the like. A specific name of the control information is not limited in embodiments of this application. For example, the two communication parties may exchange control information in a sensing control phase (sensing control phase). Optionally, the two communication parties may exchange control information in one sensing round (sensing round). One sensing round may include a plurality of sensing slots. A quantity of sensing slots included in one sensing round is not limited in embodiments of this application. In an example, the two communication parties may exchange control information once in one sensing round. In another example, the two communication parties may exchange control information once in a plurality of sensing rounds, that is, control information corresponding to the plurality of sensing rounds is the same. If the cyclic shift parameter is not updated, the transmit end may send a sensing signal by using the latest control information including the cyclic shift parameter, and the receive end may perform processing by using the latest control information including the cyclic shift parameter.

It may be understood that, when a pulse burst sensing mode is used and a periodic ZCZ sequence is used, the control information may include the cyclic shift parameter, and further include at least one of a quantity of pulses in a short burst, an interval between adjacent pulses in a short burst, an interval between adjacent short bursts, a sequence identifier, a sequence length, a first sequence type, and types of using different cyclic shift bit quantities (or types of using a same cyclic shift bit quantity). In the foregoing manner, because a pulse burst transmitting manner is used, an unambiguous distance is large. This effectively improves transmission power and increases a sensing range.

For example, when M=1, the control information may include the cyclic shift parameter, and further include at least one of a quantity 1 of pulses in a short burst, an interval between adjacent pulses in a short burst (equal to an interval between adjacent short bursts), a sequence identifier, a sequence length, and a first sequence type.

When the pulse burst sensing mode is used and an aperiodic ZCZ sequence is used, at least one of the following may be included: a quantity of pulses in a short burst, an interval between adjacent pulses in a short burst, an interval between adjacent short bursts, a sequence identifier, and a sequence length.

For example, the aperiodic ZCZ sequence used by the two communication parties may be shown in Table 4. It may be understood that Table 4 is merely an example, and should not be construed as a limitation on embodiments of this application. $s_1$ to $s_{16}$ in Table 4 may be understood as aperiodic ZCZ sequences. A sequence set whose index is 0 indicates that the sequence set includes eight aperiodic ZCZ sequences, a sequence set whose index is 1 indicates that the sequence set includes 16 aperiodic ZCZ sequences, a sequence set whose index is 2 indicates that the sequence set includes four aperiodic ZCZ sequences, and a sequence set whose index is 3 indicates that the sequence set includes four aperiodic ZCZ sequences.

Table 4

| Index of a sequence set | Aperiodic ZCZ sequence |
|---|---|
| 0 | $s_1$=(1,1,1,1,1,1,1,1,0,0,0,0,-1,-1,1,1,-1,-1,1, 1,0,0,0,0,-1,1,-1,1,-1,1,-1,1,0,0,0,0,-1,1,1, -1,-1,1,1, -1,0,0,0,0),<br><br>$s_2$=(-1,-1,1,1,-1,-1,1,1,0,0,0,0,1,1,1,1,1,1,1,1,0,0,0,0,1,-1,-1,1,1,-1,-1, 1,0,0,0,0, 1,-1, 1,-1, 1,-1, 1,-1,0,0,0,0),<br><br>$s_3$=(-1,1,-1,1,-1,1,-1,1,0,0,0,0,1,-1,-1,1,1,-1,-1,1,0,0,0,0,1,1,1,1,1,1,1,1,0,0,0,0,1,1,1,-1,-1,0,0,0,0),<br><br>$s_4$=(-1,1,1,-1,-1,1,1,-1,0,0,0,0,1,-1,1,-1,1,-1,1,-1,0,0,0,0,1,1,-1,-1,1,1,-1,-1,0,0,0,0,1,1,1,1,1,1,1,1,0,0,0,0-),<br><br>$s_5$=(1,1,1,1,-1,-1,-1,-1,0,0,0,0,-1,-1,1,1,1,1,-1,-11,-1,-1,0,0,0,0,-1,1,-1,1,1,-1,1,-1,0,0,0,0,-1,1,1,-1,1,-1,1-,1,0,0,0,0),<br><br>$s_6$=(-1,-1,1,1,1,1,-1,-1,0,0,0,0,1,1,1,1,-1,-1,-1,-1,0,0,0,0,1,-1,-1,1,1,-1,-1,1,1,-1,0,0,0,0,1,-1,1,-1,-1,1,-1,1,0,0,-0,0),<br><br>$s_7$=(-1,1,-1,1,1,-1,1,-1,0,0,0,0,1-1,-1,1,1,-1,1,1,-1,0,0,0,0,1,1,1,1,-1,-1,-1,-1,0,0,0,0,1,1,-1,-1,-1,-1,1,1,0,0,-0,0),<br><br>$s_8$=(-1,1,1-1,1,-1,-1,1,0,0,0,0,1,-1,1,-1,-1,1,-1,1,0,0,0,0,1,1,-1,-1,-1,-1, 1, 1,0,0,0,0, 1, 1, 1, 1,-1,-1,-1,-1,0,0,0,0) |
| 1 | $s_1$= (1,1,1,1,1,1,1,1,1,1,1,1,1,1,1,1,0,0,0,0,0,0,0,1,-1,1,-1,1,-1,1,-1,1,-1,-1,1,-1,1,-1,1,-1,0,0,0,0,0,0,0,0,- 1,1,-1,-1,1,1,-1,-1,1,1,-1,-1,1,1,-1,-1,0,0,0,0,0,0,0,0,1,-1,-1,1,1,-1,-1,1,1,-1,-1,1,1,-1,-1,1,1,0,0,0,0,0,0,0,- 0,0,1,1,1,1,1,1, 1,0,0,0,0,0,0,0,0,1,-1,1,-1,-1,1,-1,1,1,-1,1,-1,-1,1,-1,1,0,0,0,0,0,0,0,0,1,1,-1,-1,-1,-1,1,1,1,1,-1,-1,-1,-- 1,1,1,0,0,0,0,0,0,0,1,-1,-1,1,-1,1,1,-1,1,-1,-1,1,-1,1,1,-1,0,0,0,0,0,0,0,0);<br><br>$s_2$= (1,-1,1,-1,1,-1,1,-1,1,-1,1,-1,1,-1,1,-1,0,0,0,0,0,0,0,0,1,1,1,1,1,1,1,1,1,1,1,1,1,1,1,1,0,0,0,0,0,0,0,0,- 1,-1,-1,1,1,-1,-1,1,1,-1,-1,1,1,-1,-1,1,1,0,0,0,0,0,0,0,0,1,1,-1,-1,1,1,-1,-1,1,1,-1,-1,1,1,-1,-1,0,0,0,0,0,0,0,- 0,0,1,-1,1,-1,-1,1,-1,1,1,-1,1,-1,-1,1,-1,1,0,0,0,0,0,0,0,0,1,1,1,1,1,1, 1,0,0,0,0,0,0,0,0,1,-1,1,-1,-1,1,-1,1,-1,1,1,-1,1,-1,-1,1,-1,1,0,0,0,0,0,0,0,0,1,1,-1,-1,-1,-1,1,1,1,1,-1,-1,-1,-- 1,1,1,0,0,0,0,0,0,0); |

| Index of a sequence set | Aperiodic ZCZ sequence |
|---|---|
| | $s_3=$<br>(1,1,-1,-1,1,1,-1,-1,1,1,-1,-1,1,1,-1,-1,0,0,0,0,0,0,0,0,1,-1,-1,1,1,-1,-1,1,1,-1,-1,1,1,-1,-1,1,1,0,0,0,0,0,0,0,0,-0,0,1,1,1,1,1,1,1,1,1,1,1,1,1,1,1,1,0,0,0,0,0,0,0,0,1,-1,1,-1,1,-1,1,-1,1,-1,1,-1,1,-1,1,-1,1,-1,0,0,0,0,0,0,0,0-,0,1,1,-1,-1,-1,-1,1,1,1,1,-1,-1,-1,-1,1,1,0,0,0,0,0,0,0,0,1,-1,-1,1,1,-1,1,1,-1,1,-1,-1,1,1,-1,1,1,-1,0,0,0,0,0,0,0,-0,0,0,1,1,1,1,-1,-1,-1,-1,1,1,1,1,-1,-1,-1,-1,0,0,0,0,0,0,0,1,0,0,0,0,0,0,0,1,-1,1,-1,-1,1,-1,1,1,-1,1,--1,-1,1,1,-1,0,0,0,0,0,0,0); |
| | $s_4=$<br>(1,-1,-1,1,1,-1,-1,1,1,-1,-1,1,1,-1,-1,1,0,0,0,0,0,0,0,0,1,1,-1,-1,1,1,-1,-1,1,1,-1,-1,1,1,-1,-1,1,-1,0,0,0,0,0,0,0-,0,0,1,-1,1,-1,1,-1,1,-1,1,-1,1,-1,1,-1,1,-1,-1,0,0,0,0,0,0,0,1,1,1,1,1,1,1,1,1,1,1,1,1,1,1,1,0,0,0,0,0,0,0-,0,1,-1,-1,1,1,-1,-1,1,1,-1,-1,1,1,-1,1,1,-1,0,0,0,0,0,0,0,1,1,-1,-1,-1,-1,1,1,1,1,1,1,-1,-1,-1,-1,1,1,0,0,0,0,0,-0,0,0,1,-1,1,1,-1,-1,1,1,-1,-1,1,1,-1,-1,1,-1,1,0,0,0,0,0,0,0,1,1,1,1,-1,-1,-1,-1,1,1,1,1,-1,-1,-1,-1,0,0,0,-0,0,0,0,0); |
| | $s_5=$<br>(1,1,1,1,-1,-1,-1-1,1,1,1,1,-1,-1,-1,-1,0,0,0,0,0,0,0,1,-1,1,-1,-1,1,1,-1,1,1,-1,-1,1,1,-1,-1,1,-1,1,0,0,0,0,0,0-,0,0,1,1,-1,-1,-1,-1,1,1,1,1,-1,-1,-1,-1,1,1,0,0,0,0,0,0,0,1,-1,-1,1,1,-1,-1,1,1,-1,-1,1,1,-1,-1,1,1,-1,0,0,0,0,-0,0,0,0,1,1,1,1,1,1,1,1,1,1,1,1,1,1,1,1,1,0,0,0,0,0,0,0,1,-1,1,-1,1,-1,1,-1,1,-1,1,-1,1,-1,1,-1,-1,0,0,0,0,0-,0,0,0,1,1,1,-1,-1,1,1,-1,-1,1,1,-1,-1,1,-1,0,0,0,0,0,0,0,1,-1,-1,1,1,-1,-1,1,1,-1,-1,1,1,-1,-1,1,1,0,0,0,0,0,0,0,-0); |
| | $s_6=$<br>(1,-1,1,-1,-1,1,-1,1,1,-1,1,-1,-1,1,-1,1,0,0,0,0,0,0,0,1,1,1,1,-1,-1,-1,-1,1,1,1,1,-1,-1,-1,-1,0,0,0,0,0,0,0,-0,0,1,-1,-1,1,1,-1,1,1,-1,1,-1,-1,1,1,-1,0,0,0,0,0,0,0,0,1,1,1,1,<br>1,-1,1,1,0,0,0,0,0,0,0,1,-1,1,-1,1,-1,1,-1,1,-1,1,-1,1,-1,1,-1,-1,0,0,0,0,0,0,0,1,1,1,1,1,1,1,1,1,1,1,1,1-,1,1,1,0,0,0,0,0,0,0,1,-1,-1,1,1,-1,-1,1,1,-1,-1,1,1,-1,-1,1,1,0,0,0,0,0,0,0,1,1,-1,-1,1,1,-1,-1,1,1,-1,-1,1,-1,-,1,1,-1,-1,0,0,0,0,0,0,0); |
| | $s_7=$<br>(1,1,-1,-1,-1,-1,1,1,1,1,-1,-1,-1,-1,1,1,0,0,0,0,0,0,0,1,-1,-1,1,1,-1,1,1,-1,1,1,-1,-1,1,1,-1,1,1,-1,0,0,0,0,0,0,0-,0,0,1,1,1,1,-1,-1,-1,-1,1,1,1,1,-1,-1,-1,-1,0,0,0,0,0,0,0,1,-1,1,-1,1,1,-1,1,1,-1,1,-1,<br>1,1,-1,1,0,0,0,0,0,0,0,1,1,-1,-1,1,1,-1,-1,1,1,-1,-1,1,1,-1,1,-1,0,0,0,0,0,0,0,1,-1,1,1,-1,-1,1,1,-1,-1,1,-1,-,1,1,-1,-1,0,0,0,0,0,0,0,1,1,1,1,1,1,1,1,1,1,1,1,1,1,1,1,0,0,0,0,0,0,0,1,-1,1,-1,1,-1,1,-1,1,-1,1,-1,-1-,1,-1,1,-1,0,0,0,0,0,0,0); |
| | $s_8=$<br>(1,-1,-1,1,-1,1,1,-1,1,-1,-1,1,-1,1,1,-1,0,0,0,0,0,0,0,0,1,1,-1,-1,-1,-1,1,1,1,1,-1,-1,-1,-1,1,1,0,0,0,0,0,0,0,-0,0,1,-1,1,-1,1,-1,1,-1,1,-1,1,-1,1,-1,1,-1,-1,0,0,0,0,0,0,0,1,1,1,1,-1,-1,-1,-1,1,1,1,1,-1,-1,-1,-1,0,0,0,0,-0,0,0,0,1,-1,-1,1,1,-1,-1,1,1,-1,-1,1,1,-1,-1,1,-1,1,0,0,0,0,0,0,0,1,1,-1,-1,1,1,-1,-1,1,1,-1,-1,1,1,-1,-1,1,-1,0,0,-0,0,0,0,0,1,-1,1,1,-1,1,1,-1,1,1,-1,1,1,-1,1,1,-1,0,0,0,0,0,0,0,1,1,1,1,1,1,1,1,1,1,1,1,1,1,1,1,0,0,0-,0,0,0,0); |
| | $s_9=$<br>(1,1,1,1,1,1,1,1,-1,-1,-1,-1,-1,-1,-1,-1,0,0,0,0,0,0,0,1,-1,1,-1,1,-1,1,-1,1,-1,1,-1,1,-1,1,-1,1,1,0,0,0,0,0,0,0,0,1,1,<br>1,-1,1,1,-1,-1,1,1,0,0,0,0,0,0,0,1,-1,-1,1,1,-1,-1,1,1,-1,-1,1,1,-1,-1,1,-1,0,0,0,0,0,0,0,1,1,1,1,-1,-1,-1,--1,-1,-1,-1,-<br>1,1,1,1,0,0,0,0,0,0,0,1,-1,1,-1,1,-1,1,-1,1,-1,1,-1,-1,0,0,0,0,0,0,0,1,1,-1,-1,-1,-1,1,1,1,-1,-1,--1,1,1,1,1,-1,-1,0,0,0,0,0,0,0,1,-1,-1,1,1,-1,-1,1,1,-1,-1,1,-1,-1,1,1,0,0,0,0,0,0,0,0); |
| | $s_{10}=$<br>(1,-1,-1,1,1,-1,-1,1,-1,1,1,-1,-1,1,1,-1,0,0,0,0,0,0,0,1,1,1,1,1,1,1,1,-1,-1,-1,-1,-1,-1,-1,-1,0,0,0,0,0,0,0,-0,0,1,-1,-1,1,1,-1,-1,1,1,-1,-1,1,1,-1,-1,1,-1,0,0,0,0,0,0,0,1,1,-1,-1,1,1,-1,-1,-1,-1,1,1,-1,-1,1,1,0,0,0,0,0,-0,0,0,1,-1,1,-1,-1,1,-1,1,1,-1,1,-1,-1,1,-1,1,-1,0,0,0,0,0,0,0,1,1,1,1,-1,-1,-1,-1,-1,-1,-1,-1,1,1,1,1,0,0,-0,0,0,0,0,1,-1,-1,1,-1,1,1,-1,-1,1,1,-1,1,-1,-1,1,0,0,0,0,0,0,0,1,1,-1,-1,-1,-1,1,1,-1,-1,1,1,1,1,-1,-1,-,0,0,0,0,0,0,0,0); |

(continued)

| Index of a sequence set | Aperiodic ZCZ sequence |
|---|---|
| | $s_{11}=$<br>(1,1,-1,1,1,-1,-1,-1,-1,1,1,-1,-1,1,1,0,0,0,0,0,0,0,0,1,-1,-1,1,1,-1,-1,1,1,-1,1,1,-1,1,1,-1,0,0,0,0,0,0,-0,0,1,1,1,1,1,1,1,-1,-1,-1,-1,-1,-1,-1,-1,0,0,0,0,0,0,0,1,-1,1,-1,1,-1,1,1,-1,-1,1,1,-1,1,1,-1,1,1,0,0,0,0,-0,0,0,0,1,1,-1,-1,-1,-1,1,1,-1,-1,1,1,1,1,-1,-1,0,0,0,0,0,0,0,1,-1,-1,1,1,-1,-1,1,1,-1,-1,1,1,-1,-1,1,1,0,0,-0,0,0,0,0,0,1,1,1,1,-1,-1,-1,-1,-1,-1,-1,1,1,1,1,0,0,0,0,0,0,0,1,-1,1,-1,-1,1,1,-1,-1,1,1,-1,-1,1,1,-1,1,1,-1,-0,0,0,0,0,0,0,0);<br><br>$s_{12}=$<br>(1,-1,-1,1,1,-1,-1,1,-1,1,1,-1,-1,1,1,-1,0,0,0,0,0,0,0,1,1,-1,-1,1,1,-1,-1,-1,-1,1,1,1,-1,-1,1,1,0,0,0,0,0,0,-0,0,1,-1,1,-1,1,-1,1,-1,-1,1,-1,1,-1,1,-1,1,-1,0,0,0,0,0,0,0,1,1,1,1,1,1,1,1,-1,-1,-1,-1,-1,-1,-1,-1,0,0,0,0,-0,0,0,0,1,-1,-1,1,1,-1,1,1,-1,-1,1,1,-1,-1,1,1,-1,-1,0,0,0,0,0,0,0,1,1,-1,-1,-1,-1,1,1,1,-1,-1,1,1,-1,-1,1,1,0,-0,0,0,0,0,0,0,1,-1,1,-1,1,-1,1,-1,1,-1,1,-1,1,-1,1,-1,0,0,0,0,0,0,0,1,1,1,1,-1,-1,-1,-1,-1,-1,-1,1,1,1,1,-0,0,0,0,0,0,0,0);<br><br>$s_{13}=$<br>(1,1,1,1,-1,-1,-1,-1,-1,-1,-1,1,1,1,1,0,0,0,0,0,0,0,1,-1,1,-1,-1,1,1,-1,1,1,-1,1,1,-1,1,1,-1,-1,0,0,0,0,0,0,-0,0,1,1,-1,-1,-1,1,1,1,-1,1,1,1,1,-1,-1,0,0,0,0,0,0,0,1,-1,-1,1,1,-1,1,1,-1,-1,1,1,1,-1,-1,1,1,0,0,0,0,-0,0,0,0,1,1,1,1,1,1,1,1,-1,-1,-1,-1,-1,-1,-1,-1,0,0,0,0,0,0,0,1,-1,1,-1,1,1,-1,1,1,-1,-1,1,1,-1,1,1,-1,1,1,-0,0,0,0,0,0,0,0,1,1,-1,-1,1,1,-1,-1,-1,1,1,1,-1,-1,1,1,-1,1,1,0,0,0,0,0,0,0,1,-1,-1,1,1,-1,-1,1,1,-1,-1,1,1,-1,-1,-1,1,1,-1,0,0,0,0,0,0,0,0);<br><br>$s_{14}=$<br>(1,-1,1,-1,1,1,-1,1,1,-1,1,1,1,-1,1,-1,0,0,0,0,0,0,0,1,1,1,1,-1,-1,-1,-1,-1,-1,-1,1,1,1,1,1,0,0,0,0,0,0,-0,0,1,-1,-1,1,1,-1,1,1,-1,1,1,1,-1,-1,-1,1,1,0,0,0,0,0,0,0,1,1,-1,-1,-1,1,1,1,-1,-1,1,1,1,1,-1,-1,0,0,0,0,-0,0,0,0,1,-1,1,-1,1,1,-1,1,1,-1,1,1,-1,1,1,-1,1,0,0,0,0,0,0,0,1,1,1,1,1,1,1,1,-1,-1,-1,-1,-1,-1,-1,-1,0,0,-0,0,0,0,0,1,-1,-1,1,1,-1,1,1,1,-1,1,1,-1,-1,1,1,-1,0,0,0,0,0,0,0,1,1,-1,1,1,1,-1,-1,-1,-1,1,1,1,-1,-1,1,1,-1,0,0,0,0,0,0,0,0);<br><br>$s_{15}=$<br>(1,1,-1,-1,-1,-1,1,1,1,-1,1,1,1,1,-1,-1,0,0,0,0,0,0,0,1,-1,-1,1,1,-1,1,1,-1,-1,1,1,-1,-1,1,1,-1,-1,0,0,0,0,0,0,-0,0,1,1,1,1,-1,-1,-1,-1,-1,-1,-1,1,1,1,1,1,0,0,0,0,0,0,0,1,-1,1,-1,-1,1,1,-1,1,1,-1,1,1,-1,1,1,-1,-1,0,0,0,0,0,0,0,0,1,-1,1,-1,1,1,-1,1,1,-1,-1,1,1,-1,-1,1,1,-1,0,0,-0,0,0,0,0,0,1,1,1,1,1,1,1,1,-1,-1,-1,-1,-1,-1,-1,-1,<br>1,0,0,0,0,0,0,0,1,-1,1,-1,1,1,-1,1,1,-1,1,1,-1,1,1,-1,1,0,0,0,0,0,0,0);<br><br>$s_{16}=$<br>(1,-1,-1,1,-1,1,1,-1,-1,1,1,1,-1,1,-1,-1,1,1,0,0,0,0,0,0,0,1,1,-1,-1,-1,-1,1,1,1,-1,-1,1,1,1,1,-1,-1,0,0,0,0,0,0,-0,0,1,-1,1,-1,-1,1,1,-1,1,1,-1,1,1,1,1,-1,-1,0,0,0,0,0,0,0,1,1,1,1,-1,-1,-1,-1,-1,-1,-1,-1,1,1,1,1,1,0,0,0,0,-0,0,0,0,1,-1,-1,1,1,-1,-1,1,1,1,-1,1,1,-1,-1,1,1,-1,0,0,0,0,0,0,0,1,1,-1,-1,1,1,-1,1,1,-1,1,1,-1,-1,1,1,-1,-1,0,0,-0,0,0,0,0,0,1,-1,1,-1,1,1,-1,1,1,-1,-1,1,1,-1,-1,1,1,-1,1,1,0,0,0,0,0,0,0,1,1,1,1,1,1,1,1,-1,-1,-1,-1,-1,-1,-1,-1,-0,0,0,0,0,0,0,0) |
| 2 | $s_1=$<br>(-1,-1,-1,1,1,-1,1,1,0,0,0,0,0,0,0,0,1,1,1,-1,1,-1,1,1,0,0,0,0,0,0,0,1,-1,1,1,-1,-1,-1,1,0,0,0,0,0,0,0,0,-1,-1,-1,-1,-1,-1,-1,1);<br><br>$s_2=$<br>(1,1,1,-1,1,-1,1,1,0,0,0,0,0,0,0,0,-1,-1,-1,1,1,-1,1,1,0,0,0,0,0,0,0,-1,1,-1,-1,-1,-1,-1,1,0,0,0,0,0,0,0,0-,1,-1,1,1,1,-1,-1,-1,1);<br><br>$s_3=$<br>(1,1,-1,1,-1,1,1,0,0,0,0,0,0,0,0,-1,-1,1,-1,-1,1,1,1,0,0,0,0,0,0,0,-1,1,1,1,1,1,-1,1,0,0,0,0,0,0,0,0,-1,-1,-1,-1,1,1,-1,1);<br><br>$s_4=$<br>(-1,-1,1,-1,1,1,1,0,0,0,0,0,0,0,0,1,1,-1,1,-1,1,1,1,0,0,0,0,0,0,0,1,-1,-1,-1,1,1,-1,1,0,0,0,0,0,0,0,0,--1,1,1,1,1,1,-1,1) |
| 3 | $s_1=$<br>(1,1,-1,1,-1,1,1,1,0,0,0,0,0,0,0,0,0,1,1,-1,1,-1,1,1,-1,-1,1,1,0,0,0,0,0,0,0,0,0,1,1,-1,1,1,1,1,1,-1,-1,-1,0,0,0,0,0,0,0,0,0,0,1,1,-1,1,1,1,1,1,-1,-1); |

(continued)

| Index of a sequence set | Aperiodic ZCZ sequence |
|---|---|
| | $s_2=$<br>(1,1,-1,1,-1,1,-1,-1,1,1,0,0,0,0,0,0,0,0,0,-1,-1,1,-1,1,-1,1,1,-1,-1,0,0,0,0,0,0,0,0,1,1,-1,1,1,1,1,1,-1,-1,0,0,0,0,0,0,0,0,-1,-1,1,-1,-1,-1,-1,-1,1,1);<br>$s_3=$<br>(-1,-1,1,1,1,1,1,-1,1,1,0,0,0,0,0,0,0,0,0,-1,-1,1,1,1,1,1,-1,1,1,0,0,0,0,0,0,0,0,-1,-1,1,1,1,-1,1,1,-1,1,-1,1,-1,0,0,0,0,0,0,0,0,-1,-1,1,1,1,-1,1,1,-1,-1);<br>$s_4=$<br>(-1,-1,1,1,1,1,1,-1,1,1,0,0,0,0,0,0,0,0,1,1,-1,-1,-1,-1,-1,1,1,-1,-1,0,0,0,0,0,0,0,0,-1,-1,1,1,1,-1,1,1,-1,1,-1,-1,-1,0,0,0,0,0,0,0,0,1,1,-1,-1,1,-1,1,1,-1,1,1) |

In embodiments of this application, the control information includes at least one of the following:
a cyclic shift parameter, a quantity of pulses in a short burst (pulse per burst), an interval between adjacent pulses in a short burst (pulse interval within burst), an interval between adjacent short bursts (burst repetition interval), a sequence identifier (or referred to as an index indication (index indication)), a sequence length (sequence length), a sequence type (sequence type), and a cyclic shift type (cyclic shift type).

The following describes the preceding information in detail.

In an example, a value of the quantity of pulses in a short burst may indicate a maximum quantity of pulses sent by the transmit end in the short burst. For example, the quantity of pulses in a short burst may indicate a quantity of pulses (or a quantity of chips) in a short burst, and the quantity of pulses may be equal to a quantity of sequences. The quantity of pulses shown herein is shown by using a quantity of sequences as an example. A specific pulse in a short burst further needs to be determined based on an $i^{th}$ element in the M sequences. For example, a value of the quantity of pulses in a short burst may be 4, indicating that the transmit end can send a maximum of four pulses in the short burst. For example, a value of the quantity of pulses in a short burst may be 5, indicating that the transmit end can send a maximum of five pulses in the short burst. Examples in which the quantity of pulses in a short burst is greater than or equal to 2 are not listed one by one herein. For example, if a value of the quantity of pulses in a short burst is 1, it may indicate that the transmit end uses a non-pulse burst sensing mode. The non-pulse burst sensing mode may include, for example, using a pulse transmitting manner with a high pulse repetition frequency (pulse repetition frequency, PRF), where transmission power is high in this manner, or using a pulse transmitting manner with a low PRF, where an unambiguous distance is large in this manner. For example, the high PRF may correspond to a level of 100 megahertz (MHz) (for example, 124.8 MHz), and the low PRF may correspond to a level lower than 100 MHz (for example, 7.8 MHz).

The value of the quantity of pulses in a short burst is equal to a quantity of sequences. In this manner, the receive end can effectively learn of a quantity of cyclic shift bit quantities (namely, a value of M) in the cyclic shift parameter, so as to effectively learn of a position of the control information, and avoid mistaking information in another information element (information element, IE) as information in the control information.

In another example, the quantity of pulses in a short burst may indicate that a non-pulse burst sensing mode is used, or a pulse burst sensing mode is used. For example, if the value of the quantity of pulses in a short burst is 0, it indicates that a non-pulse burst sensing mode is used; or if the value of the quantity of pulses in a short burst is 1, it indicates that a pulse burst sensing mode is used.

A unit of the interval between adjacent pulses in a short burst may be chip (chip) or nanosecond (ns).

A unit of the interval between adjacent short bursts may be nanosecond (ns) or chip.

The sequence identifier may indicate the reference sequence, and the sequence identifier may be understood as a sequence number of the sequence or an index of the sequence. The sequence length may indicate a length of the reference sequence. The reference sequence may be a sequence in a sequence set. The sequence set may be stored at the transmit end and the receive end, or the sequence set may be defined by a protocol, or the like. This is not limited in embodiments of this application. The two communication parties may effectively learn of the reference sequence by using at least one of the sequence identifier or the sequence length. The reference sequence shown above is shown by using a sequence using a periodic zero correlation zone as an example, that is, the reference sequence may be a ternary sequence (for example, an ipatov sequence) having a complete periodic autocorrelation characteristic or a sequence formed by cyclic shift of the ternary sequence. When the two communication parties use a sequence of an aperiodic zero correlation zone, the sequence identifier may indicate a set identifier of a plurality of sequences used to determine the sensing signal. In this case, the control information may not include the cyclic shift parameter.

The sequence type may indicate that a sequence having a periodic zero correlation zone is used, or a sequence not having a periodic zero correlation zone is used. For example, if the sequence type includes a first sequence type, the control information includes the cyclic shift parameter, and the first sequence type may indicate that the M sequences have a periodic zero correlation zone. For example, if the sequence type includes a second sequence type, the control information does not include the cyclic shift parameter, a sequence included in the control information indicates a sequence set identifier, a sequence set corresponding to the sequence set identifier includes a plurality of sequences, and none of the plurality of sequences has a periodic zero correlation zone. For example, when a value of the sequence type is 0, it indicates a sequence set having a periodic zero correlation zone; and when a value of the sequence type is 1, it indicates a sequence set having an aperiodic zero correlation zone.

The cyclic shift type indicates that a same relative cyclic shift bit quantity is used between adjacent sequences, or indicates that different relative cyclic shift bit quantities may be used between adjacent sequences. For example, when a value of the cyclic shift type is 0, it indicates that a same relative cyclic shift bit quantity is used between adjacent sequences. A cyclic shift bit quantity may be determined by a sequence length and a sequence quantity (namely, the quantity of pulses in a short burst), for example, cyclic shift bit quantity=sequence length/quantity of pulses in a short burst. When the value of the cyclic shift type is 1, it indicates that different relative cyclic shift bit quantities are used between adjacent sequences.

Optionally, the control information may further include at least one of a cyclic prefix (cyclic prefix, CP) length (CP length) and a cyclic suffix (cyclic suffix, CS) length (CS length). It may be understood that lengths of the cyclic prefix and the cyclic suffix may be the same or may be different.

It may be understood that the foregoing descriptions of the relative cyclic shift bit quantity, the cyclic shift parameter, and the control information are also applicable to the following.

FIG. 4 is a schematic flowchart of a sensing-based communication method according to an embodiment of this application. For descriptions of a transmit end and a receive end, refer to the foregoing descriptions. It may be understood that the transmit end and the receive end shown in embodiments of this application are relative to a sensing signal. Therefore, a transmit end of the sensing signal is not necessarily a transmit end of control information, and correspondingly, a receive end of the sensing signal is not necessarily a receive end of the control information. As shown in FIG. 4, the method includes the following steps.

401: The transmit end obtains the control information.

That the transmit end obtains the control information may include: The transmit end determines the control information (or referred to as that the transmit end generates the control information); or the transmit end receives the control information. It may be understood that after determining the control information, the transmit end may send the control information.

For a description of the control information, refer to the foregoing description. Details are not described herein again.

402: The transmit end sends the sensing signal based on the control information. Correspondingly, the receive end receives the sensing signal.

It may be understood that the sensing signal shown in FIG. 4 is merely an example. For example, the sensing signal may be collectively referred to as a signal. For another example, the sensing signal may also be referred to as a UWB pulse, or the like.

For example, when the transmit end sends the control information to the receive end, the transmit end may first determine the control information, then determine M sequences based on the control information, and send the sensing signal. For another example, when the transmit end sends the control information to the receive end, the transmit end may first determine the M sequences, then determine the control information based on the M sequences, and send the sensing signal. For example, when the transmit end receives the control information, the transmit end may obtain M cyclic shift bit quantities based on the control information, then determine the M sequences based on the M cyclic shift bit quantities and a reference sequence, and send the sensing signal.

In embodiments of this application, the sending the sensing signal based on the control information may be understood as that the transmit end determines a type of a to-be-sent sequence based on a sequence type and a cyclic shift type. Similarly, the receive end determines a type of a to-be-received sequence based on a sequence type and a type of cyclic shift bit quantities.

For example, when the sequence type includes a first sequence type, and the cyclic shift type includes using different relative cyclic shift bit quantities, the M sequences are determined (for example, M is greater than or equal to 2). The transmit end may send the sensing signal based on the M sequences, an interval between adjacent pulses in a short burst, an interval between adjacent short bursts, and a chip size corresponding to one pulse. Similarly, the receive end may receive the sensing signal based on the M sequences, the interval between adjacent pulses in a short burst, the interval between adjacent short bursts, and the chip size corresponding to one pulse. For example, the M sequences may be used to determine positions of positive pulses, negative pulses, and no pulses included in a short burst (or a pulse burst), the chip size corresponding to one pulse may be used to determine duration of one pulse (one chip is still corresponded when no pulse exists), and an interval between pulses may be determined by the interval between adjacent pulses in a short burst.

After a pulse burst, time of a next pulse burst is determined based on the interval between adjacent short bursts. When M=1, the transmit end may send the sensing signal based on a sequence determined by the transmit end, the quantity of pulses in a short burst (that is, 1), and the interval between adjacent short bursts. Similarly, the receive end may receive the sensing signal based on a sequence determined by the receive end, the quantity of pulses in a short burst (that is, 1), and the interval between adjacent short bursts.

For another example, when the sequence type includes the first sequence type, and the cyclic shift type includes using a same relative cyclic shift bit quantity, sequence sets with a same relative cyclic shift bit quantity are determined (for example, based on a cyclic shift parameter, a sequence identifier, and a sequence length). The transmit end may send the sensing signal based on the sequence sets with the same relative cyclic shift bit quantity, the interval between adjacent pulses in a short burst, the interval between adjacent short bursts, and the chip size corresponding to one pulse. Similarly, the receive end may receive the sensing signal based on the sequence sets with the same relative cyclic shift bit quantity, the interval between adjacent pulses in a short burst, the interval between adjacent short bursts, and the chip size corresponding to one pulse.

For another example, when the sequence type includes a second sequence type, the transmit end may determine an aperiodic ZCZ sequence set (for example, based on at least one of the sequence identifier or the sequence length), and then send the sensing signal based on the aperiodic ZCZ sequence set, the interval between adjacent pulses in a short burst, the interval between adjacent short bursts, and the chip size corresponding to one pulse. Similarly, the receive end may receive the sensing signal based on the aperiodic ZCZ sequence set, the interval between adjacent pulses in a short burst, the interval between adjacent short bursts, and the chip size corresponding to one pulse.

403: The receive end obtains the control information, and performs processing based on the control information.

That the receive end obtains the control information includes: The receive end receives the control information; or the receive end determines the control information. It may be understood that after determining the control information, the receive end may send the control information.

In an example, the transmit end may send the control information, and correspondingly, the receive end receives the control information. In another example, the receive end may send the control information, and correspondingly, the transmit end receives the control information.

For example, the receive end may receive the control information from the transmit end, obtain the M cyclic shift bit quantities and the reference sequence, and determine the M sequences. For example, the receive end may send the control information to the transmit end. For example, the receive end first determines the M sequences, and then determines the control information based on the M sequences; or the receive end may first send the control information, and then determines the M sequences based on the control information. After determining the M sequences, the receive end may correlate the M sequences with the received signal, and determine information about a target based on a correlation result. For example, the determining information about a target based on a correlation result includes: determining a zero correlation zone based on the correlation result, and determining the information about the target based on the zero correlation zone. The information about the target may include at least one of the following: a speed of the target, an angle of the target, a distance of the target, and attenuation of the target.

When sending the sensing signal, the transmit end may send M pulses (which is only used as an example, and a specific quantity of pulses is determined based on an element of a sequence) in a short burst, and the transmit end may send a plurality of short bursts (for example, N+x short bursts). Some of these pulses may reach the receive end through a line of sight path, and some may reach the receive end through a reflection path.

For example, after receiving pulses in a short burst, the receive end may perform analog-to-digital conversion sampling to obtain a sampling value, and determine, based on a threshold, that each sampling value is one of +1, -1, and 0. After receiving pulses in the N+x short bursts, or after receiving pulses in a first short burst corresponding to the M sequences, the receive end may perform correlation, determine a highest peak as an initial position of a ZCZ, and determine a length of the ZCZ based on a smallest cyclic shift bit quantity in relative cyclic shift bit quantities and an interval between adjacent short bursts. Then, related information of the target is determined based on the ZCZ. For example, a quantity of targets may be determined based on a quantity of peaks in the ZCZ. As shown in FIG. 5a, the highest peak in the ZCZ is the initial position of the ZCZ, and other three peaks in the ZCZ may correspond to three targets.

Optionally, after performing processing based on the control information, the receive end may further send feedback information to the transmit end, where the feedback information is used to feed back the related information of the target; or the feedback information is used to feed back a sensing measurement result obtained by the receive end based on the control information. Specific content of the feedback information is not listed in embodiments of this application.

In embodiments of this application, when M=1 or M=2, two communication parties have a consistent understanding of the cyclic shift bit quantity by using the control information. This effectively avoids a case in which a sensing result is inaccurate because the two communication parties have inconsistent understandings of the cyclic shift bit quantity, and improves accuracy of the sensing result.

When M is greater than 2, if relative cyclic shift bit quantities between adjacent sequences are the same, side lobes may overlap when the receive end of the sensing signal performs a related operation. Consequently, a side lobe amplitude is high, the receive end cannot effectively determine a peak position (for example, a highest peak), and a zero correlation zone (zero correlation zone, ZCZ) cannot be effectively determined, resulting in low accuracy of the sensing result. However, in embodiments of this application, at least two relative cyclic shift bit quantities in relative cyclic shift bit quantities between adjacent sequences are different. Therefore, when the receive end of the sensing signal processes the sensing signal, for example, performs the related operation, a case in which side lobes overlap is effectively reduced, thereby reducing a probability of a high side lobe amplitude. This effectively reduces a side lobe amplitude of a non-zero correlation zone, ensures that the receive end of the sensing signal can effectively determine the zero correlation zone, and effectively improves accuracy of the sensing result.

A communication apparatus provided in embodiments of this application is described below.

In embodiments of this application, division into functional modules may be performed on the communication apparatus based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. The following describes in detail the communication apparatuses in embodiments of this application with reference to FIG. 6 to FIG. 8.

FIG. 6 is a diagram of a structure of a communication apparatus according to an embodiment of this application. As shown in FIG. 6, the communication apparatus includes a processing unit 601 and a transceiver unit 602.

In some embodiments of this application, the communication apparatus may be the transmit end shown above or a chip, and the chip may be applied to the transmit end. In other words, the communication apparatus may be configured to perform the steps, the functions, or the like performed by the transmit end in the foregoing method embodiments.

The processing unit 601 is configured to: obtain control information, and send a sensing signal based on the control information.

For example, the processing unit 601 is configured to: determine control information; or input the control information by using the transceiver unit 602.

For example, the processing unit 601 is specifically configured to: determine M sequences based on M cyclic shift bit quantities and a reference sequence; and send the sensing signal based on the M sequences.

It may be understood that the specific descriptions of the transceiver unit and the processing unit described in embodiments of this application are merely examples. For specific functions, steps, or the like performed by the transceiver unit and the processing unit, refer to the foregoing method embodiments. Details are not described herein again.

FIG. 6 is reused. In some other embodiments of this application, the communication apparatus may be the receive end shown above, a chip in the receive end, or the like. In other words, the communication apparatus may be configured to perform the steps, the functions, or the like performed by the receive end in the foregoing method embodiments.

For example, the processing unit 601 is configured to: obtain the control information, and perform processing based on the control information.

For example, the processing unit 601 is configured to determine the control information, and input the control information by using the transceiver unit 602.

For example, the processing unit 601 is specifically configured to: determine the M sequences based on the M cyclic shift bit quantities and the reference sequence; and process the received sensing signal based on the M sequences.

It may be understood that the specific descriptions of the transceiver unit and the processing unit described in embodiments of this application are merely examples. For specific functions, steps, or the like performed by the transceiver unit and the processing unit, refer to the foregoing method embodiments. Details are not described herein again.

In the foregoing embodiments, for descriptions of the control information, the cyclic shift parameter, the M cyclic shift bit quantities, the relative cyclic shift bit quantities, the M sequences, and the like, refer to the descriptions in the foregoing method embodiments. Details are not described herein again.

The foregoing describes the transmit end and the receive end in embodiments of this application. The following describes possible product forms of the transmit end and the receive end. It should be understood that a product in any form that has the function of the transmit end in FIG. 6 or a product in any form that has the function of the receive end in FIG. 6 falls within the protection scope of embodiments of this application. It should be further understood that the following description is merely an example, and product forms of the transmit end and the receive end in embodiments of this application are not limited thereto.

In a possible implementation, in the communication apparatus shown in FIG. 6, the processing unit 601 may be one or more processors, the transceiver unit 602 may be a transceiver, or the transceiver unit 602 may include a sending unit and a receiving unit. The sending unit may be a transmitter, the receiving unit may be a receiver, and the sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the information by the processor. When outputting the foregoing information, the processor outputs the foregoing information to a transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information, and then processed information is input into the processor.

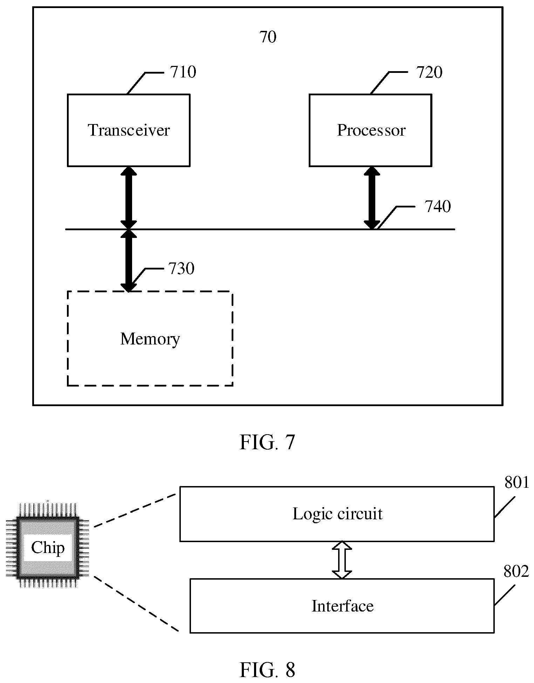

As shown in FIG. 7, the communication apparatus 70 includes one or more processors 720 and a transceiver 710.

For example, when the communication apparatus is configured to perform the steps, the methods, or the functions performed by the transmit end,
the processor 720 is configured to: obtain control information, and send a sensing signal based on the control information.

For example, the processor 720 is configured to: determine control information; or input the control information by using the transceiver 710.

For example, the processor 720 is specifically configured to: determine M sequences based on M cyclic shift bit quantities and a reference sequence; and send the sensing signal based on the M sequences.

For example, when the communication apparatus is configured to perform the steps, the methods, or the functions performed by the receive end,
the processor 720 is configured to: obtain the control information, and perform processing based on the control information.

For example, the processor 720 is configured to: determine the control information; and input the control information by using the transceiver 710.

For example, the processor 720 is specifically configured to: determine the M sequences based on the M cyclic shift bit quantities and the reference sequence; and process the received sensing signal based on the M sequences.

In the foregoing embodiments, for descriptions of the control information, the cyclic shift parameter, the M cyclic shift bit quantities, the relative cyclic shift bit quantities, the M sequences, and the like, refer to the descriptions in the foregoing method embodiments. Details are not described herein again.

In various implementations of the communication apparatus shown in FIG. 7, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 70 may further include one or more memories 730, configured to store program instructions, data, and/or the like. The memory 730 is coupled to the processor 720. The coupling in embodiments of this application may be an indirect coupling or a communication connection between apparatuses, units, or modules in an electrical form, a mechanical form, or another form, and is used for information exchange between the apparatuses, the units, or the modules. The processor 720 may cooperate with the memory 730. The processor 720 may execute the program instructions stored in the memory 730. Optionally, at least one of the one or more memories may be included in the processor. For example, the memory may be configured to store control information. For example, the memory may be configured to store M sequences, an aperiodic ZCZ sequence set, or the like.

A specific connection medium between the transceiver 710, the processor 720, and the memory 730 is not limited in embodiments of this application. In embodiments of this application, in FIG. 7, the memory 730, the processor 720, and the transceiver 710 are connected through a bus 740. The bus is represented by a bold line in FIG. 7. A manner of connection between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In embodiments of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data. For example, for the receive end, the memory may store reference information, namely, a sensing measurement result in a sampling unit. Optionally, for the transmit end, because the transmit end needs to parse CIR parameter information based on the reference information, the memory of the transmit end may also store the reference information.

For example, the processor 720 is mainly configured to: process a communication protocol and communication data, control the entire communication apparatus, perform a software program, and process data of the software program. The memory 730 is mainly configured to store the software program and the data. The transceiver 710 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. An input/output apparatus, like a touchscreen, a display, or a keyboard, is mainly configured to: receive data input by a user and output data to the user.

After the communication apparatus is powered on, the processor 720 may read the software program in the memory 730, interpret and execute instructions of the software program, and process data of the software program. When the data needs to be sent in a wireless manner, the processor 720 performs baseband processing on to-be-sent data, and then outputs a baseband signal to a radio frequency circuit. The radio frequency circuit performs radio frequency processing on the baseband signal, and then sends the radio frequency signal in an electromagnetic wave form through the antenna. When the data is sent to the communication apparatus, the radio frequency circuit receives the radio frequency signal through the antenna, converts the radio frequency signal into a baseband signal, and outputs the baseband signal to the processor 720. The processor 720 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in embodiments of this application may alternatively include more components than those shown in FIG. 7, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 6, the processing unit 601 may be one or more logic circuits, and the transceiver unit 602 may be an input/output interface, or may be referred to as a communication interface, an interface circuit, an interface, or the like. Alternatively, the transceiver unit 602 may include a sending unit and a receiving unit. The sending unit may be an output interface, and the receiving unit may be an input interface. The sending unit and the receiving unit are integrated into one unit, for example, an input/output interface. As shown in FIG. 8, the communication apparatus shown in FIG. 8 includes a logic circuit 801 and an interface 802. That is, the processing unit 601 may be implemented through the logic circuit 801, and the transceiver unit 602 may be implemented through the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 is an example in which the communication apparatus is a chip. The chip includes the logic circuit 801 and the interface 802.

It may be understood that the chip shown in embodiments of this application may include a narrowband chip, an ultra-bandwidth chip, or the like. This is not limited in embodiments of this application. The step of sending a sensing signal or the step of receiving a sensing signal shown above may be performed by the ultra-bandwidth chip, and whether other steps are performed by the ultra-bandwidth chip is not limited in embodiments of this application. It may be understood that the narrowband chip and the ultra-bandwidth chip may be included in a same communication apparatus, or may be disposed in different communication apparatuses. Therefore, the foregoing steps of the transmit end may be implemented by a communication apparatus including a narrowband chip and an ultra-bandwidth chip, or may be implemented by an apparatus including a narrowband chip and an apparatus including an ultra-bandwidth chip separately.

In embodiments of this application, the logic circuit and the interface may be coupled to each other. A specific manner of connection between the logical circuit and the interface is not limited in embodiments of this application. For ease of description, the following uses a narrowband chip as an example for description. However, this should not be construed as a limitation on embodiments of this application. For example, after the narrowband chip outputs a sensing signal, the ultra-bandwidth chip may send the sensing signal. For example, after receiving the sensing signal, the ultra-bandwidth chip may send the sensing signal to the narrowband chip.

For example, when the communication apparatus is configured to perform the methods, the functions, or the steps performed by the transmit end, the logic circuit 801 is configured to: obtain control information, and output the sensing signal based on the control information.

For example, the logic circuit 801 is configured to input the control information through the interface 802. For example, the logic circuit 801 is configured to output the sensing signal through the interface 802.

For example, when the communication apparatus is configured to perform the methods, the functions, or the steps performed by the receive end, the logic circuit 801 is configured to: obtain the control information, and process the sensing signal based on the control information.

For example, the logic circuit 801 is configured to input the control information through the interface 802.

Optionally, the chip shown in FIG. 8 may further include a memory. The memory may be configured to store the control information, or the memory is configured to store M sequences, or the memory is configured to store an aperiodic ZCZ sequence set, or the like.

It may be understood that the communication apparatus described in embodiments of this application may implement the methods provided in embodiments of this application in a form of hardware, or may implement the methods provided in embodiments of this application in a form of software. This is not limited in embodiments of this application.

In the foregoing embodiments, for descriptions of the control information, the cyclic shift parameter, the M cyclic shift bit quantities, the relative cyclic shift bit quantities, the M sequences, and the like, refer to the descriptions in the foregoing method embodiments. Details are not described herein again.

For specific implementations of embodiments shown in FIG. 8, further refer to the foregoing embodiments. Details are not described herein again.

Embodiments of this application further provide a wireless communication system. The wireless communication system includes a transmit end and a receive end. The transmit end and the receive end may be configured to perform the method in any one of the foregoing embodiments (as shown in FIG. 4).

In addition, this application further provides a computer program. The computer program is used to implement operations and/or processing performed by the transmit end in the methods provided in this application.

This application further provides a computer program. The computer program is used to implement operations and/or processing performed by the receive end in the methods provided in this application.

This application further provides a computer-readable storage medium. The computer-readable storage medium stores computer code. When the computer code is run on a computer, the computer is enabled to perform operations and/or processing performed by the transmit end in the methods provided in this application.

This application further provides a computer-readable storage medium. The computer-readable storage medium stores computer code. When the computer code is run on a computer, the computer is enabled to perform operations and/or processing performed by the receive end in the methods provided in this application.

This application further provides a computer program product. The computer program product includes computer code or a computer program. When the computer code or the computer program is run on a computer, operations and/or processing performed by the transmit end in the methods provided in this application are/is performed.

This application further provides a computer program product. The computer program product includes computer code or a computer program. When the computer code or the computer program is run on a computer, operations and/or processing performed by the receive end in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units may be electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing-based communication method, wherein the method comprises:

   obtaining control information, wherein the control information comprises a cyclic shift parameter, the cyclic shift parameter indicates M cyclic shift bit quantities, the M cyclic shift bit quantities correspond to M sequences, and when M=1, the M cyclic shift bit quantities are cyclic shift bit quantities of sequences relative to a reference sequence, or when M is greater than 2, at least two relative cyclic shift bit quantities in relative cyclic shift bit quantities between adjacent sequences in the M sequences corresponding to the M cyclic shift bit quantities are different; and
   processing a signal based on the control information.

2. The method according to claim 1, wherein the processing a signal based on the control information comprises:

   determining the M sequences based on the M cyclic shift bit quantities and the reference sequence; and
   processing the signal based on the M sequences.

3. The method according to claim 2, wherein the processing the signal based on the M sequences comprises:

   correlating the M sequences with the received signal; and
   determining information about a target based on a correlation result.

4. The method according to any one of claims 1 to 3, wherein the obtaining control information comprises:

   determining the control information; or
   receiving the control information.

5. A sensing-based communication method, wherein the method comprises:

   obtaining control information, wherein the control information comprises a cyclic shift parameter, the cyclic shift parameter indicates M cyclic shift bit quantities, the M cyclic shift bit quantities correspond to M sequences, and when M=1, the M cyclic shift bit quantities are cyclic shift bit quantities of sequences relative to a reference sequence, or when M is greater than 2, at least two relative cyclic shift bit quantities in relative cyclic shift bit quantities between adjacent sequences in the M sequences corresponding to the M cyclic shift bit quantities are different; and
   sending a signal based on the control information.

6. The method according to claim 5, wherein the sending a signal based on the control information comprises:

   determining the M sequences based on the M cyclic shift bit quantities and the reference sequence; and
   sending the signal based on the M sequences.

7. The method according to claim 5 or 6, wherein the obtaining control information comprises:

   receiving the control information; or
   determining the control information.

8. The method according to any one of claims 1 to 7, wherein when M=2, the two cyclic shift bit quantities comprise a cyclic shift bit quantity of one of the two sequences relative to the reference sequence and a relative cyclic shift bit quantity between the two sequences, or the two cyclic shift bit quantities comprise cyclic shift bit quantities of sequences in the two sequences relative to the reference sequence.

9. The method according to any one of claims 1 to 8, wherein the relative cyclic shift bit quantities are greater than or equal to a cyclic shift bit quantity threshold, and the cyclic shift bit quantity threshold is determined based on an interval between adjacent short bursts.

10. The method according to any one of claims 1 to 9, wherein the control information further comprises at least one of the following:
a quantity of pulses in a short burst, an interval between adjacent pulses in the short burst, or the interval between adjacent short bursts.

11. The method according to any one of claims 1 to 10, wherein a pulse in an $i^{th}$ short burst is determined by an $i^{th}$ element of each sequence in the M sequences, i is an integer greater than or equal to 1 and less than or equal to N, N is equal to a quantity of elements in the sequence, elements in the sequence comprise -1, 0, and +1, and -1 represents a negative pulse and +1 represents a positive pulse, or -1 represents a positive pulse and +1 represents a negative pulse.

12. The method according to any one of claims 1 to 11, wherein the control information further comprises at least one of a sequence identifier or a sequence length, and the at least one of the sequence identifier or the sequence length indicates the reference sequence.

13. The method according to any one of claims 1 to 12, wherein the control information further comprises at least one of the following:

a sequence type, wherein the sequence type comprises a first sequence type, and the first sequence type indicates that the M sequences have a periodic zero correlation zone; or
a cyclic shift type, wherein the cyclic shift type comprises using different relative cyclic shift bit quantities.

14. The method according to any one of claims 1 to 13, wherein that the cyclic shift parameter indicates M cyclic shift bit quantities comprises:
the cyclic shift parameter comprises information about a random number generation algorithm and a quantity of bits of a random number, and the random number generation algorithm and the quantity of bits of the random number are used to determine the M cyclic shift bit quantities.

15. The method according to any one of claims 1 to 14, wherein that the cyclic shift parameter indicates M cyclic shift bit quantities comprises:
the cyclic shift parameter comprises offsets between the relative cyclic shift bit quantities between the adjacent sequences in the M sequences and the cyclic shift bit quantity threshold.

16. A communication apparatus, comprising a unit configured to perform the method according to any one of claims 1 to 15.

17. A communication apparatus, comprising a processor and a memory, wherein

the memory is configured to store instructions; and
the processor is configured to execute the instructions, so that the method according to any one of claims 1 to 15 is performed.

18. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 15 is performed.

19. A computer-readable storage medium, wherein the computer-readable storage medium is configured to store a computer program, and when the computer program is executed, the method according to any one of claims 1 to 15 is performed.

20. A computer program, wherein when the computer program is executed, the method according to any one of claims 1 to 15 is performed.

21. A communication system, wherein the communication system comprises a transmit end and a receive end, the transmit end is configured to perform the method according to any one of claims 5 to 12, and the receive end is configured to perform the method according to any one of claims 1, 2, 3, 4, and 8 to 12.

PAN coordinator

○ Reduced function device

● Full function device

FIG. 1a

PAN coordinator

○ Reduced function device

● Full function device

FIG. 1b

FIG. 2a

FIG. 2b

FIG. 2c

FIG. 2d

FIG. 2e

FIG. 2f

Pulse burst

Transmitted    Masked target    Close-by target

Far-away target

Cyclic
prefix

Sampling
point

Cyclic
suffix

Sampling point

FIG. 3

Transmit end

Receive end

Obtain control
information    401

Send a sensing signal based
on the control information    402

Obtain the control
information, and
perform processing
based on the control
information    403

Feedback information

FIG. 4

FIG. 5a

FIG. 5b

FIG. 5c

FIG. 6

70

710

720

Transceiver

Processor

740

730

Memory

FIG. 7

801

Logic circuit

Chip

802

Interface

FIG. 8

## INTERNATIONAL SEARCH REPORT

| International application No. |
| --- |
| **PCT/CN2023/125370** |

| | |
| --- | --- |
| **A. CLASSIFICATION OF SUBJECT MATTER** | |
| H04B 1/7163(2011.01)i | |

According to International Patent Classification (IPC) or to both national classification and IPC

**B. FIELDS SEARCHED**

Minimum documentation searched (classification system followed by classification symbols)

IPC: H04B，H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 不同, 差, 超宽带, 短突发, 幅度, 感知, 根, 基准, 间隔, 量, 零相关, 脉冲, 脉冲簇, 旁瓣, 数, 突发, 位, 相对, 相关, 序列, 循环移位, 值, correlation, difference, initiator, responder, sensing, sequence, shift, UWB, wpan, ZCZ, zero, zone, cycl+, 802.15

**C. DOCUMENTS CONSIDERED TO BE RELEVANT**

| Category* | Citation of document, with indication, where appropriate, of the relevant passages | Relevant to claim No. |
| --- | --- | --- |
| X | CN 111629394 A (HUAWEI TECHNOLOGIES CO., LTD.) 04 September 2020 (2020-09-04) description, paragraphs 74-264 | 1-21 |
| X | CN 111629445 A (HUAWEI TECHNOLOGIES CO., LTD.) 04 September 2020 (2020-09-04) description, paragraphs 72-300 | 1-21 |
| A | US 2021314886 A1 (LG ELECTRONICS INC.) 07 October 2021 (2021-10-07) entire document | 1-21 |
| A | WO 2022082792 A1 (HUAWEI TECHNOLOGIES CO., LTD.) 28 April 2022 (2022-04-28) entire document | 1-21 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 November 2023** | **01 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/125370**

| Patent document cited in search report | | | Publication date (day/month/year) | Patent family member(s) | | | Publication date (day/month/year) |
|---|---|---|---|---|---|---|---|
| CN | 111629394 | A | 04 September 2020 | WO | 2020173295 | A1 | 03 September 2020 |
| CN | 111629445 | A | 04 September 2020 | WO | 2020173282 | A1 | 03 September 2020 |
| US | 2021314886 | A1 | 07 October 2021 | WO | 2020091555 | A1 | 07 May 2020 |
| WO | 2022082792 | A1 | 28 April 2022 | US | 2023261827 | A1 | 17 August 2023 |
| | | | | EP | 4224961 | A1 | 09 August 2023 |
| | | | | CN | 116391337 | A | 04 July 2023 |

Form PCT/ISA/210 (patent family annex) (July 2022)

**EP 4 604 405 A1**

**Patent documents cited in the description**

- CN 202211296757